# EUROPÄISCHE PATENTSCHRIFT

(11) **EP 3 339 215 B1**
(45) Veröffentlichungstag und Bekanntmachung des Hinweises auf die Patenterteilung: **12.02.2020**
(21) Anmeldenummer: 17206383.6
(22) Anmeldetag: 11.12.2017
(51) Int. Cl.: B65G 15/58, B65G 17/00, B65G 17/46, B65G 21/20, B65G 23/18, B65G 35/06

(54) **FÖRDERVORRICHTUNG SOWIE FÖRDERANLAGE MIT DER FÖRDERVORRICHTUNG**
CONVEYOR DEVICE AND CONVEYOR SYSTEM COMPRISING THE CONVEYOR DEVICE
DISPOSITIF DE TRANSPORT ET INSTALLATION DE TRANSPORT POURVUE DE DISPOSITIF DE TRANSPORT

(30) Priorität: 23.12.2016 DE 102016125533
(43) Veröffentlichungstag der Anmeldung: 27.06.2018
(60) Teilanmeldung: 19218407.5
(73) Patentinhaber: ASP Automation GmbH, 91757 Treuchtlingen (DE)
(72) Erfinder: Schramm, Werner, 91788 Pappenheim (DE)
(74) Vertreter: Negendanck, Matthias

(56) Entgegenhaltungen:
- EP-B1- 0 276 409
- WO-A1-2012/024164
- WO-A2-2016/173899
- CH-A5- 603 476
- DE-A1- 4 210 188
- DE-U1- 29 521 082
- DE-U1-202009 013 888
- JP-A- S53 100 579
- JP-A- 2002 037 437
- JP-A- 2012 166 934
- US-A- 4 289 227

## Beschreibung

Die Erfindung betrifft eine Fördervorrichtung mit den Merkmalen des Obergriffs des Anspruchs 1. Ferner betrifft die Erfindung eine Förderanlage mit der Fördervorrichtung. Förderer sind Maschinen zum Bewegen von Werkstücken von einem ersten Ort zu einem zweiten Ort. Dabei werden insbesondere bei der industriellen Nutzung Stetigförderer eingesetzt, welche eine Untergruppe der Förderer bilden, um einen kontinuierlichen Förderstrom von Schütt- oder Stückgütern zu ermöglichen. Hierzu sind die Förderer insbesondere mit Mitnehmern ausgestattet, welche zur Aufnahme des Guts ausgebildet sind. Beispielsweise werden die Mitnehmer über eine Förderkette in eine Umlaufrichtung mitgenommen und sind mit dieser gekoppelt. Um einen regelmäßigen Abstand zwischen den einzelnen Mitnehmern zu erzeugen sind Taktförderer bekannt, welche beispielsweise über einen Freigabemechanismus die Mitnehmer in regelmäßigen zeitlichen Abständen freigeben, so dass die Abstände gebildet werden.

Die Druckschrift JP S53 100579 A, die den nächstkommenden Stand der Technik nach dem Oberbegriff des Anspruchs 1 bildet, offenbart einen Bandförderer, wobei ein Endlosbandmittel durch Verbinden einer Vielzahl von Stäben aus magnetischem Material gebildet wird, um einen Trägerkörper mit magnetischen Mitteln anzutreiben, während dieser aufgrund der magnetischen Anziehungskraft auf den Endlosriemen gehalten wird.

Die Druckschrift EP 276 409 B1 offenbart einen Taktförderer mit einer Vielzahl von entlang einer Umlaufbahn bewegbaren Mitnehmern, die mittels eines Freigabemechanismus einzeln abrufbar und mittels wenigstens eines Schleusenrades einzeln und in regelmäßigen Abständen nacheinander an ein endloses, umlaufend angetriebenes Zugorgan koppelbar und die in einem, in Förderrichtung gesehen dem Schleusenrad folgenden Mitnahmebereich an das Zugorgan gekoppelt sind, wobei das Zugorgan im Mitnahmebereich an seiner den Mitnehmern abgekehrten Seite über ein schienenartiges Führungselement geführt ist um das Zugorgan in Umlaufbahnnähe zu halten, und dass zum kraftschlüssigen Koppeln der Mitnehmer an das Zugorgan die Mitnehmer, das Zugorgan und gegebenenfalls das Führungselement mit ferromagnetischem Material ausgestattet sind, wobei entweder die Mitnehmer oder das Führungselement zum Erzeugen eines Magnetfeldes ausgebildet sind.

Der Erfindung liegt die Aufgabe zugrunde, eine Fördervorrichtung vorzuschlagen, welche sich durch eine hohe Betriebssicherheit auszeichnet.

Diese Aufgabe wird durch eine Fördervorrichtung mit den Merkmalen des Anspruchs 1 sowie eine Förderanlange mit der Fördervorrichtung mit den Merkmalen des Anspruchs 12 gelöst. Bevorzugte oder vorteilhafte Ausführungsformen der Erfindung ergeben sich aus den Unteransprüchen, der nachfolgenden Beschreibung und/oder den beigefügten Figuren.

Erfindungsgemäß wird eine Fördervorrichtung vorgeschlagen, welche insbesondere zur Förderung von Fördergut, vorzugsweise Werkstücke oder Stückgut, ausgebildet und/oder geeignet ist. Die Fördervorrichtung hat die Funktion das Fördergut auf einer festgelegten Strecke zu transportieren. Besonders bevorzugt dient die Fördervorrichtung dazu das Fördergut bei einem weiterlaufenden Betrieb anzuhalten, wobei nachfolgendes Fördergut automatisch anhält und/oder aufgestaut wird. Insbesondere ist die Fördervorrichtung als ein Stetigförderer, vorzugsweise als ein Stauförderer und/oder als ein Taktförderer, und/oder als ein Umlaufförderer ausgebildet.

Die Fördervorrichtung weist mehrere voneinander getrennte Mitnahmeeinrichtungen zum Transport mindestens eines Förderguts auf. Insbesondere sind alle oder ein Großteil der Mitnahmeeinrichtungen baugleich ausgebildet, wobei die Mitnahmeeinrichtungen voneinander beabstandet angeordnet sind. Alternativ können die Mitnahmeeinrichtungen auch unterschiedlich ausgebildet sein. Beispielsweise sind die Mitnahmeeinrichtungen als Teileträger und/oder als Shuttles ausgebildet. Insbesondere ist jeder Mitnahmeeinrichtung ein Fördergut zugeordnet. Alternativ können auch mehrere Mitnahmeeinrichtungen zum Transport eines einzelnen Förderguts ausgebildet sein. Das Beladen und/oder Entladen der Mitnahmeeinrichtungen mit dem Fördergut kann dabei an mehreren Stellen des und/oder am Anfang und/oder am Ende des Transportweges erfolgen. Dabei kann das Fördergut formschlüssig und/oder kraftschlüssig und/oder reibschlüssig mit mindestens einer der Mitnahmeeinrichtungen verbunden sein. Beispielsweise weist die Fördervorrichtung mehr als drei, vorzugsweise mehr zehn, im Speziellen mehr als zwanzig Mitnahmeeinrichtungen auf. Alternativ oder optional ergänzend weist die Fördervorrichtung weniger als dreißig, vorzugsweise weniger als fünfzehn, im Speziellen weniger als fünf Mitnahmeeinrichtungen auf. Optional können auch weitere, anders ausgeführte Mitnahmeeinrichtungen vorgesehen sein.

Die Fördervorrichtung weist mindestens einen endlos umlaufenden Förderriemen und mindestens eine Antriebseinrichtung auf, wobei die Antriebseinrichtung den Förderriemen in einer Förderrichtung antreibt. Insbesondere wird durch den umlaufenden Förderriemen ein stetig kontinuierlicher Transportstrom erzeugt. Vorzugsweise ist der Förderriemen als ein Zahnriemen oder als ein Flachriemen ausgebildet. Insbesondere ist die Antriebseinrichtung als ein Kopfantrieb oder als ein Untergurtantrieb ausgebildet. Vorzugsweise weist die Fördervorrichtung genau eine Antriebseinrichtung auf. Alternativ kann die Fördervorrichtung mindestens noch eine weitere Antriebseinrichtung aufweisen. Insbesondere weist die Antriebseinrichtung einen Elektromotor und mindestens eine Antriebsrolle auf. Beispielsweis umschlingt der Förderriemen die Antriebsrolle und/oder steht mit dieser in Eingriff, so dass ein Drehmoment des Elektromotors auf die Antriebsrolle übertragen wird und den Förderriemen in der Förderrichtung antreibt. Im Speziellen kann die Antriebsrolle durch eine endseitig an der Fördervorrichtung angeordnete Umlenkrolle oder durch eine separate Rolle im Bereich der Förderstecke gebildet werden.

Jede der Mitnahmeeinrichtungen weist mindestens einen Magneten auf. Insbesondere hat der Magnet die Funktion, die Mitnahmeeinrichtung kraftschlüssig mit dem Förderriemen zu verbinden. Vorzugsweise ist der Magnet als ein Permanentmagnet ausgebildet.

Der Förderriemen ist ferromagnetisch ausgebildet oder weist ein ferromagnetisches Material auf, so dass die Mitnahmeeinrichtungen mit dem Förderriemen magnetisch koppelbar sind. Insbesondere ist der Förderriemen aus einem Gewebe oder einem elastischen Kunststoff, z.B. Gummi oder Polyurethan, gebildet. Das ferromagnetische Material ist auf den Förderriemen aufgebracht und/oder in diesen eingebettet. Vorzugsweise ist das ferromagnetische Material durch ein Metallgitter und/oder durch einzelne in Förderrichtung verlaufende metallische Drähte und/oder Stahlzugträger und/oder eine Beschichtung mit ferromagnetischen Eigenschaften, z.B. durch galvanisieren, und/oder durch eine Beimischung von Metallpartikeln gebildet. Alternativ kann der Förderriemen auch selbst ferromagnetisch sein und beispielsweise als Stahlband ausgebildet sein oder ein Stahlband umfassen.

Die Mitnahmeeinrichtungen werden in einem gekoppelten Zustand durch den Förderriemen in der Förderrichtung mitgenommen. Prinzipiell können die Mitnahmeeinrichtungen dauerhaft mit dem Förderriemen gekoppelt sein, besonders bevorzugt jedoch sind die Mitnahmeeinrichtungen abschnittsweise mit dem Förderriemen gekoppelt. Optional ergänzend können die Mitnahmeeinrichtungen reibschlüssig und/oder formschlüssig mit dem Förderriemen gekoppelt sein.

Im Rahmen der Erfindung wird vorgeschlagen, dass die Mitnahmeeinrichtungen flexibel ausgebildet sind, so dass sich die Mitnahmeeinrichtungen entlang einer Kurve an eine Kurvenkrümmung der Kurve anpassen. Vorzugsweise weisen alle Mitnahmeeinrichtungen die gleiche Länge auf. Alternativ können die Mitnahmeeinrichtungen unterschiedlich lang ausgebildet sein.

Insbesondere sind die Mitnahmeeinrichtungen durch in Förderrichtung aneinandergereihte bewegliche, vorzugsweise ineinandergefügte und/oder über mindestens ein Gelenk verbundene, Glieder. Alternativ sind die Mitnahmeeinrichtungen aus einem flexiblen Material. Insbesondere sind die Mitnahmeeinrichtung als ein Abschnitt eines Zahnriemens oder eines Federstahlbands oder eines verstärkten Textilbands ausgebildet.

Insbesondere wird die Kurve durch einen Umlenkabschnitt der Fördervorrichtung, welcher vorzugsweise zur Rückführung des Förderriemens und/oder der Mitnahmeeinrichtung dient, gebildet. Vorzugsweise erfolgt dabei eine Umlenkung um 180°. Der Umlenkabschnitt ist dabei jeweils an den beiden Endseiten der Fördervorrichtung angeordnet. Insbesondere weist die Kurve in dem Umlenkabschnitt einen Krümmungsradius von mehr als 1 cm, vorzugsweise mehr als 10 cm, im Speziellen mehr als 40 cm. Alternativ oder optional ergänzend beträgt der Krümmungsradius weniger als 50 cm, vorzugsweise weniger als 20, im Speziellen weniger als 5 cm. Prinzipiell umschlingt der Förderriemen dabei die endseitig angeordnete Umlenkrolle mit einem Umschlingungswinkel von mehr als 90°, vorzugsweise mehr als 140°, im Speziellen mehr als 200°. Besonders bevorzugt jedoch umschlingt der Förderriemen die Umlenkrolle mit einem Umschlingungswinkel von genau 180°.

Alternativ oder optional ergänzend wird die Kurve durch einen Kurvenabschnitt und/oder einen Steigungsabschnitt und/oder einem Gefälleabschnitt innerhalb der Förderstrecke gebildet.

Ein Vorteil der Erfindung besteht darin, dass durch die flexible Ausgestaltung der Mitnahmeeinrichtungen, diese beliebig lang ausgestaltet werden können, wobei bei einer Kurvenfahrt die Mitnahmeeinrichtungen sich an die Kurvenkrümmung bzw. den Verlauf des Förderriemens anpassen. Dadurch wird insbesondere ein störungssicherer Betrieb begünstigt, da ein Verklemmen der Mitnahmeeinrichtung stark reduziert wird. Ein weiterer Vorteil besteht darin, dass durch die flexible Ausgestaltung besonders enge Radien, insbesondere in den Umlenkbereichen, gefahren werden können. Somit könne geringere Bauhöhen und eine kompaktere Bauweise der Fördervorrichtung realisiert werden. Die magnetische Kopplung hat den Vorteil, dass ein Abheben der Mitnahmeeinrichtungen, insbesondere in Kurvenfahrten und/oder beim Rücktransport reduziert wird. Ein weiterer Vorteil besteht darin, dass durch die magnetische Kopplung eine besonders starke Kopplung realisierbar ist, was die Betriebssicherheit positiv beeinflusst. Durch beispielsweise einen zusätzlichen Reibschluss kann die Kopplung zusätzlich verbessert werden. Trotzdem kann in Staubereichen die magnetische Kopplung aufgehoben werden, so dass die Fördereinrichtung als ein Stauförderer ausgebildet sein kann.

In einer konkreten Ausführung weist die Fördervorrichtung mindestens ein Trägermodul zur Aufnahme des Förderguts auf, wobei das Trägermodul lösbar mit mindestens einer der Mitnahmeeinrichtungen verbunden und/oder verbindbar ist. Prinzipiell kann das Trägermodul als ein Werkstückträger ausgebildet sein. Besonders bevorzugt jedoch ist das Trägermodul als ein Formbauteil ausgebildet, wobei das Trägermodul zur formschlüssigen Aufnahme des Förderguts ausgebildet ist.

Insbesondere ist das Trägermodul formschlüssig und/oder kraftschlüssig und/oder reibschlüssig mit der Mitnahmeeinrichtung verbunden. Prinzipiell kann das Trägermodul einen weiteren Magneten aufweisen, so dass das Trägermodul magnetisch mit der Mitnahmeeinrichtung gekoppelt und/oder koppelbar ist. Alternativ oder optional ergänzend kann das Trägermodul über eine Steckverbindung oder über eine Schnappverbindung mit der Mitnahmeeinrichtung verbunden sein. Besonders bevorzugt jedoch ist das Trägermodul über eine Schraubverbindung mit der Mitnahmeeinrichtung verbunden. Dadurch wird beispielsweise ein schnelles Wechseln unterschiedlicher Trägermodule ermöglicht, so dass die Mitnahmeeinrichtungen in kurzer Zeit auf das entsprechende Fördergut angepasst werden kann. Insbesondere kann durch entsprechende Anordnung und/oder Ausgestaltung des Trägermoduls Fördergut mit unterschiedlicher geometrischer Ausgestaltung auf der Mitnahmeeinrichtung transportiert bzw. befestigt werden. Insbesondere weist jede Mitnahmeeinrichtung mehr als zwei, im Speziellen mehr als vier Trägermodule auf.

In einer weiteren möglichen Ausführung weisen die Mitnahmeeinrichtungen an einer Oberseite eine Beschichtung auf. Insbesondere dient die Beschichtung als Schonbelag und/oder als Antirutschbelag. Vorzugsweise ist die Beschichtung eine elastische Kunststoffschicht, z.B. aus Gummi, Schaumstoff etc., und/oder eine Textilschicht, z.B. aus Filz, und/oder eine Lederschicht. Die Beschichtung ist lösbar mit mindestens einer der Mitnahmeeinrichtungen verbunden. Besonders bevorzugt bildet die Beschichtung mit dem Fördergut einen Reibschluss, so dass ein Verrutschen des Förderguts verhindert wird.

Insbesondere ist die Beschichtung formschlüssig und/oder kraftschlüssig und/oder reibschlüssig mit der Mitnahmeeinrichtung verbunden. Prinzipiell kann die Beschichtung magnetisch und/oder magnetisierbar ausgebildet sein, so dass die Beschichtung magnetisch mit der Mitnahmeeinrichtung gekoppelt und/oder koppelbar ist. Alternativ oder optional ergänzend kann die Beschichtung über eine Steckverbindung oder über eine Schnappverbindung oder über eine Schraubverbindung mit der Mitnahmeeinrichtung verbunden sein. Dadurch wird beispielsweise ein schnelles Wechseln unterschiedlicher Beschichtungen oder ein Austausch der Beschichtung gegen mindestens ein Trägermodul ermöglicht, so dass die Mitnahmeeinrichtungen in kurzer Zeit auf das entsprechende Fördergut angepasst werden kann.

In einer bevorzugten Umsetzung der Erfindung sind die Mitnahmeeinrichtungen als einzelne voneinander getrennte Kettensegmente ausgebildet, wobei jedes Kettensegment aus mindestens zwei Kettengliedern gebildet ist. Insbesondere sind die Kettenglieder als Kunststoffglieder oder als Metallglieder ausgebildet. Beispielsweise sind die Kettenglieder als Kunststoffspritzgussteil oder als Blechformteile ausgebildet. Vorzugsweise sind die Kettenglieder lösbar miteinander verbunden, so dass weitere Kettenglieder hinzugefügt oder entfernt werden können. Dadurch ist insbesondere die Länge der Kettensegmente veränderbar. Dies hat den Vorteil, dass die Kettensegmente auf unterschiedlich großes Fördergut angepasst werden können und/oder der Abstand des Förderguts beim gegenseitigen Auflaufen der Kettensegmente im Falle eines Staus durch die Länge der Kettensegmente einstellbar ist.

Insbesondere sind die Förderglieder baugleich oder identisch ausgebildet. Vorzugsweise sind die Kettenglieder über ein Gelenk und/oder formschlüssig und/oder kraftschlüssig miteinander verbunden. Insbesondere weist jedes Kettensegment mehr als zwei, vorzugsweise mehr als zehn, im Speziellen mehr als zwanzig Kettenglieder auf. Alternativ oder optional ergänzend weist jedes Kettensegment weniger als dreißig, vorzugsweise weniger als fünfzehn, im Speziellen weniger als fünf Kettenglieder auf.

Im Speziellen ist das Trägermodul mit mindestens einem der Kettenglieder verbindbar. Insbesondere ist das Trägermodul über mindestens ein Befestigungsmittel mit einem der Ketteglieder verbunden. Vorzugsweise ist das Befestigungsmittel als eine Schraube oder ein Bolzen oder ein Rastelement ausgebildet. Besonders bevorzugt weist mindestens eines der Kettenglieder mindestens eine Befestigungsmittelaufnahme zur Aufnahme des Befestigungsmittels auf. Im Speziellen weist jedes der Kettenglieder die mindestens eine Befestigungsmittelaufnahme auf. Beispielsweise sind die Bolzenaufnahmen als Bohrungen oder Durchbrüche etc. ausgebildet. Insbesondere kann das Befestigungsmittel einstückig mit dem Trägermodul verbunden sein, alternativ kann das Befestigungsmittel jedoch auch als ein separates Bauteil ausgebildet sein. Beispielsweise weist das Trägermodul mindestens zwei Bolzen auf, wobei besonders bevorzugt jedes Kettenglied mindestens zwei Befestigungsmittelaufnahmen zur Aufnahme der Bolzen aufweist, so dass die Steckverbindung gebildet ist.

Erfindungsgemäß ist der erste Förderriemen in einem Unterbrechungsbereich in Förderrichtung umgelenkt. Insbesondere ist der Förderriemen in dem Unterbrechungsbereich innerhalb der Fördervorrichtung umgelenkt. Prinzipiell kann der Förderriemen über Führungsrollen oder Führungsösen umgelenkt sein. Besonders bevorzugt jedoch verläuft der Förderriemen abschnittsweise über die Antriebseinrichtung, so dass der Unterbrechungsbereich im Bereich der Antriebseinrichtung gebildet ist. Insbesondere ist Antriebseinrichtung in die Fördervorrichtung integriert. Die Antriebseinrichtung weist dabei mindestens eine Antriebsrolle, mindestens eine erste Umlenkrolle sowie mindestens eine Spannrolle auf. Im Speziellen weist die Antriebseinrichtung eine Antriebsrolle, eine erste und eine zweite Umlenkrolle sowie eine Spannrolle auf, wobei der Förderriemen über die Antriebsrolle, die erste Umlenkrolle, die Spannrolle zu der zweiten Umlenkrolle verläuft und/oder diese umschlingt.

Mindestens eine der Mitnahmeeinrichtungen ist erfindungsgemäß in dem Unterbrechungsbereich von dem ersten Förderriemen entkoppelt. Insbesondere ist die Mitnahmeeinrichtung in dem Unterbrechungsbereich vollständig von dem Förderriemen entkoppelt. Erfindungsgemäß verlässt der Förderriemen in einem Austrittsbereich die Förderstrecke und wird in einem Eintrittsbereich wieder der Förderstrecke zugeführt. Der Eintrittsbereich und der Austrittsbereich sind dabei in Förderrichtung voneinander beabstandet, so dass der Unterbrechungsbereich gebildet ist.

Erfindungsgemäß ist die Mitnahmeeinrichtung vor und/oder nach dem Unterbrechungsbereich mit dem ersten Förderriemen magnetisch koppelbar und/oder gekoppelt. Vorzugsweise wird die Mitnahmeeinrichtung während eines Transports in Förderrichtung in dem Austrittsbereich von dem Förderriemen entkoppelt und in dem Eintrittsbereich wieder mit dem Förderriemen gekoppelt. Die Mitnahmeeinrichtungen weisen dabei insbesondere eine Kettenlänge auf, welche größer ist als eine Länge des Unterbrechungsbereichs, so dass mindestens eines der Kettenglieder vor dem Austrittsbereich und/oder nach dem Eintrittsbereich mit dem Förderriemen gekoppelt ist.

Während eines Betriebes der Fördervorrichtung wird die Mitnahmeeinrichtung in Förderrichtung transportiert, wobei die Mitnahmeeinrichtung vor dem Austrittsbereich mit dem Förderriemen gekoppelt ist. Bei Erreichen des Unterbrechungsbereichs werden die Kettenglieder nacheinander von dem Förderriemen getrennt. Durch die magnetische Kopplung vor dem Austrittsbereich wird die Mitnahmeeinrichtung in Förderrichtung weiter über den Unterbrechungsbereich geschoben. Dadurch dass die Mitnahmeeinrichtung länger ist als der Unterbrechungsbereich, wird die Mitnahmeeinrichtung so lange weitergeschoben, bis die ersten Kettenglieder wieder nach dem Eintrittsbereich mit den Förderriemen magnetisch koppeln. Der weitere Transport der Mitnahmeeinrichtung in Förderrichtung ist nun durch die magnetische Kopplung nach dem Eintrittsbereich sichergestellt.

Insbesondere übt der Förderriemen über die magnetische und/oder reibschlüssige Kopplung vor dem Unterbrechungsbereich abschnittsweise eine Druckkraft und/oder nach dem Unterbrechungsbereich abschnittsweise eine Zugkraft auf die Mitnahmeeinrichtung aus, so dass eine Übergabe der Mitnahmeeinrichtung in dem Unterbrechungsbereich erfolgt.

In einer Weiterbildung weist die Fördervorrichtung mindestens eine Profilschiene und einen zweiten Förderriemen auf, wobei die beiden Förderriemen parallel zueinander in der Profilschiene geführt sind. Insbesondere bildet die Profilschiene ein Gleitlager für die Mitnahmeeinrichtungen, vorzugsweise für die Kettensegmente, in Förderrichtung. Insbesondere weist die Profilschiene hierzu ein C-Profil oder ein U-Profil auf, so dass die Profilschiene eine Linearführung für die Mitnahmeeinrichtungen bildet.

Insbesondere werden beide Förderriemen gemeinsam über die Antriebseinrichtung angetrieben. Optional ergänzend weist die Fördervorrichtung eine weitere Antriebseinrichtung auf, wobei die weitere Antriebseinrichtung den zweiten Förderriemen separat antreibt. Dabei kann die weitere Antriebseinrichtung baugleich zu der Antriebseinrichtung aufgebaut sein. Alternativ können die beiden Antriebseinrichtungen auch z.B. über eine gemeinsame Welle getriebetechnisch miteinander verbunden sein und/oder durch einen gemeinsamen Motor angetrieben werden.

Insbesondere sind die beiden Förderriemen voneinander beabstandet angeordnet, wobei der Abstand weniger als 5 cm, vorzugsweise weniger als 3 cm, im Speziellen weniger als 1 cm beträgt. Alternativ oder optional ergänzend beträgt der Abstand mehr als 0,5 cm, vorzugsweise mehr als 2 cm, im Speziellen mehr als 4 cm. Der zweite Förderriemen ist vorzugsweise baugleich und/oder identisch zu dem ersten Förderriemen ausgebildet bzw. wie dieser zuvor beschrieben wurde.

Vorzugsweise weist die Fördervorrichtung mindestens zwei Profilschienen auf, wobei eine erste Profilschiene zur Zuführung und die zweite Profilschiene zur Rückführung der Mitnahmeeinrichtungen dient. Besonders bevorzugt sind die beiden Profilschienen hierzu an den beiden Endseiten jeweils über den Umlenkabschnitt miteinander verbunden, so dass eine Umlaufbahn gebildet ist. Im Speziellen können die beiden Profilschienen direkt miteinander verbunden sein. Alternativ sind die beiden Profilschienen über ein Zwischenprofil voneinander beabstandet. Besonders bevorzugt ist das Zwischenprofil zur Aufnahme der Antriebseinrichtung ausgebildet.

Vorzugsweise ist die Antriebseinrichtung hierzu zwischen den Profilschienen, besonders bevorzugt in dem Zwischenprofil, angeordnet.

Die beiden Förderriemen verlassen in dem Unterbrechungsbereich die Profilschiene und werden nach dem Unterbrechungsbereich wieder in die Profilschiene zurückgeführt, wobei die Mitnahmeeinrichtung in dem Unterbrechungsbereich weiter durch die Profilschiene geführt ist. Die Förderriemen verlaufen insbesondere abschnittsweise über die Antriebseinrichtung, so dass die Förderriemen in dem Austrittsbereich die Profilschiene verlassen und nach dem Unterbrechungsbereich wieder in dem Eintrittsbereich in die Profilschiene zurückgeführt werden.

Insbesondere weist die Profilschiene den Austrittsbereich und den Eintrittsbereich auf. Beispielsweise ist der Eintrittsbereich und/oder der Austrittsbereich durch einen Durchbruch und/oder eine schlitzförmige Öffnung und/oder einen Ausschnitt gebildet. Besonders bevorzugt ist Profilschiene aus nichtmagnetischen Material, vorzugsweise aus Aluminium.

In einer bevorzugten Umsetzung weist die Fördervorrichtung mindestens eine Stoppeinrichtung auf. Insbesondere hat die Stoppeinrichtung die Funktion, die Mitnahmeeinrichtungen und somit das Fördergut in Förderrichtung zu stoppen, so dass ein Stau erzeugt wird, und/oder die Mitnahmeeinrichtungen in bestimmten Taktzeiten freizugeben, so dass die Mitnahmeeinrichtungen in Förderrichtung regelmäßig voneinander beabstandet sind. Insbesondere ist die Stoppeinrichtung als Druckluftzylinder und/oder als Hydraulikzylinder und/oder als Verriegelungsmagnet ausgebildet. Vorzugsweise kann die Stoppeinrichtung in die Profilschiene, im Speziellen in die erste und/oder die zweite Profilschiene, und/oder in das Zwischenprofil integriert sein.

Alternativ ist die Stoppeinrichtung eine separate Baugruppe, welche vorzugsweise als Zwischenbau und/oder als Anbau an das Profilsystem montierbar ist. Optional ergänzend weist die Fördervorrichtung mindestens eine Sensoreinrichtung auf, wobei die Sensoreinrichtung insbesondere zur Bestimmung einer Position der Mitnahmeeinrichtungen ausgebildet ist. Beispielsweise ist die Sensoreinrichtung als kapazitiver und/oder als induktiver und/oder als magnetischer und/oder als optischer Sensor ausgebildet ist. Im Speziellen sind die Sensoreinrichtung und die Stoppeinrichtung über eine Auswerteeinrichtung signaltechnisch verbunden und/oder angesteuert.

Optional ergänzend weist die Fördervorrichtung mindestens eine weitere insbesondere mehr als zwei weitere, vorzugsweise mehr als fünf weitere, im Speziellen mehr als zehn weitere Stoppeinrichtungen auf. Im Speziellen ist jeder Stoppeinrichtung eine eigne Sensoreinrichtung zugeordnet.

Die Stoppeinrichtung weist ein Stoppelement zur Bildung eines Anschlags für die Mitnahmeeinrichtung auf, so dass die Mitnahmeeinrichtungen einzeln in Förderrichtung gestoppt oder freigegeben werden. Insbesondere dient das Stoppelement dazu die Mitnahmeeinrichtungen selektiv in Förderrichtung abzurufen und/oder anzuhalten. Vorzugsweise wird der Anschlag durch Formschluss und/oder Reibschluss und/oder Kraftschluss gebildet. Besonders bevorzugt ist das Stoppelement als ein Zylinderstift oder ein Zylinderbolzen oder als ein Elektromagnet. Beispielsweise ist das Stoppelement senkrecht zur Förderrichtung ausgerichtet und/oder verschiebbar, so dass der Anschlag gebildet ist bzw. die Mitnahmeeinrichtung freigegeben wird.

Die Stoppeinrichtung ist zwischen den beiden Förderriemen angeordnet. Insbesondere ist das Stoppelement mittig zwischen den beiden Förderriemen angeordnet. Vorzugsweise ist die Stoppeinrichtung mit der Profilschiene verbunden, wobei über eine Öffnung in der Profilschiene, dass Stoppelement ein- bzw. ausfahrbar ist.

In einer bevorzugten konstruktiven Ausgestaltung weist das Kettensegment ein Stopperglied sowie mindestens ein Einlaufglied und/oder mindestens ein Förderglied auf. Insbesondere ist das Einlaufglied und/oder das Förderglied jeweils lösbar mit dem Stopperglied verbunden. Vorzugsweise weist das Kettensegment mehr als zwei, vorzugsweise mehr als fünf im Speziellen mehr als zehn Einlaufglieder auf, wobei die Einlaufglieder hintereinander in Förderrichtung lösbar miteinander bzw. mit dem Stopperglied verbunden sind. Alternativ oder optional ergänzend weist das Kettensegment mehr als zwei, vorzugsweise mehr als fünf im Speziellen mehr als zehn Förderglieder auf, wobei die die Förderglieder hintereinander in Förderrichtung lösbar miteinander bzw. mit dem Stopperglied verbunden sind. Besonders bevorzugt sind ggf. zuerst die Einlaufglieder, das Stopperglied und anschließend ggf. die Förderglieder in Förderrichtung angeordnet.

Die Kettenglieder weisen einen ersten und einen zweiten Auflageabschnitt auf, wobei jedes der Kettenglieder mit dem ersten Auflageabschnitt auf dem ersten Förderriemen und mit dem zweiten Auflageabschnitt auf dem zweiten Förderriemen aufliegt. Insbesondere sind die Auflageabschnitte einstückig, z.B. aus einem gemeinsamen Kunststoffspritzguss, miteinander verbunden. Vorzugsweise sind die beiden Auflageabschnitt durch die Kontaktflächen bzw. Auflageflächen der Kettenglieder gebildet. Besonders bevorzugt weist der erste und/oder der zweite Auflageabschnitt den Magneten auf, so dass die magnetische Kopplung mit dem ersten und/oder dem zweiten Förderriemen erfolgt. Alternativ oder optional ergänzend weist der erste und/oder der zweite Auflageabschnitt eine Oberflächenstrukturierung auf, so dass ein Reibschluss mit dem ersten und/oder zweiten Förderriemen erfolgt.

In einer Weiterbildung weist das Einlaufglied an seiner Unterseite eine Einlaufnut auf, wobei die Einlaufnut zwischen dem ersten und dem zweiten Auflageabschnitt in Förderrichtung verläuft, so dass das Einlaufglied in Förderrichtung ungehindert über das Stoppelement der aktivierten Stoppeinrichtung förderbar ist. Das Einlaufglied hat die Funktion eine definierte Kettenlänge bei aktivierter Stoppeinrichtung zur Verfügung stellen. Dabei wird das Kettensegment so weit in Förderrichtung transportiert, bis das Stopperglied erreicht ist und den Anschlag mit dem Stoppelement bildet. Insbesondere entspricht die breite der Einlaufnut mindestens dem Abstand der beiden Förderriemen, so dass das Einlaufglied in einer axialen Ansicht in Bezug auf die Förderrichtung brückenartig die beiden Förderriemen miteinander verbindet und/oder auf diesen aufliegt.

In einer weiteren bevorzugten Realisierung weist das Stopperglied an seiner Unterseite eine Anschlagnut zur Bildung des Anschlags auf, wobei die Anschlagnut zwischen dem ersten und dem zweiten Auflageabschnitt teilweise in Förderrichtung verläuft, so dass das Stopperglied in Förderrichtung durch das Stoppelement der aktivierten Stoppeinrichtung blockiert ist. Insbesondere wird bei aktivierter Stoppeinrichtung ein Formschluss durch das Stoppelement in Förderrichtung gebildet, so dass das Kettensegment in Förderrichtung gestoppt ist. Vorzugsweise laufen dabei die beiden Förderriemen in Förderrichtung weiter, so dass weitere Kettensegmente in Förderrichtung transportiert werden bzw. auf das Kettensegment auflaufen. Durch Deaktivieren der Stoppeinrichtung wird das Stoppelement eingefahren, so dass der Formschluss aufgehoben ist und das Kettensegment vorzugsweise über die magnetische Kopplung weiter in Förderrichtung transportiert wird.

In einer weiteren konkreten Umsetzung weist jedes Kettenglied einen konkaven und einen konvexen Gelenkabschnitt zur Bildung eines Drehgelenks auf. Insbesondere wird durch das Drehgelenk eine Schwenkbewegung in Querrichtung und/oder in Vertikalrichtung zu der Förderrichtung ermöglicht, so dass sich das Kettensegment vorzugsweise dem Kurvenabschnitt und/oder dem Steigungsabschnitt und/oder dem Gefälleabschnitt anpasst. Besonders bevorzugt weisen der konkave und der konvexe Gelenkabschnitt den gleichen Krümmungsradius auf, so dass ein Formschluss in Förderrichtung gebildet ist.

Der konvexe Gelenkabschnitt ist in dem konkaven Gelenkabschnitt aufgenommen, so dass die Kettenglieder gegeneinander bewegbar sind und zugleich ein Anschlag der Kettenglieder in Förderrichtung gebildet ist. Insbesondere ist der konvexe Gelenkabschnitt eines ersten Kettenglieds unmittelbar in dem konkaven Gelenkabschnitt eines zweiten Kettenglieds aufgenommen. Beispielsweise ist der konvexe Gelenkabschnitt des Stopperglieds in dem konkaven Gelenkabschnitt des direkt mit dem Stopperglied verbundenen Förderglieds bzw. Einlaufglieds aufgenommen. Dadurch ist der Abstand zwischen den einzelnen Kettengliedern in Förderrichtung immer gleichbleibend, wodurch insbesondere ein Verrutschen der Kettenglieder und somit im Speziellen des Förderguts während dem Transport reduziert wird.

In einer konstruktiven Weiterbildung sind die Kettenglieder über eine Schnappverbindung miteinander verbunden. Insbesondere ist die Schnappverbindung als eine lösbare Verbindung ausgebildet. Vorzugsweise weist hierzu jedes Kettenglied mindestens einen, besonders bevorzugt jedoch genau zwei, Schnapphaken und jeweils pro Schnapphaken eine Schnapphakenaufnahme auf. Beispielsweise ist die Schnapphakenaufnahme als ein Langloch oder länglicher Durchbruch oder längliche Vertiefung oder als eine Bohrung ausgebildet, so dass insbesondere die Schnapphaken des ersten Kettenglieds mit einem Spiel in zumindest einer axialen Richtung in Bezug auf die Förderrichtung in den Schnapphakenaufnahmen des zweiten Kettenglieds aufgenommen sind.

Einen weiteren Gegenstand der Erfindung bildet eine Förderanlage nach Anspruch 12, mit der Fördervorrichtung wie diese zuvor beschrieben wurde beziehungsweise nach einem der Ansprüche 1-11. Die Förderanlage weist mindestens eine weitere Fördervorrichtung auf, wobei die Fördervorrichtungen in Förderrichtung miteinander verbunden sind und/oder parallel zueinander angeordnet sind. Insbesondere sind mehr als zwei, vorzugsweise mehr als vier, im Speziellen mehr als acht Fördervorrichtungen in Förderrichtung miteinander und/oder parallel zueinander angeordnet. Optional ergänzend sind die Höhe und/oder die Neigung der Fördervorrichtungen, vorzugsweise einzeln voneinander, einstellbar. Im Speziellen sind die Fördervorrichtungen gemeinsam über die Antriebseinrichtung antreibbar. Alternativ ist jeder Fördervorrichtung eine separate Antriebseinrichtung zugeordnet, wobei die Antriebseinrichtungen z.B. über eine gemeinsame Steuereinrichtung angesteuert werden, so dass vorzugsweise alle Fördervorrichtung mit der gleichen Fördergeschwindigkeit angetrieben werden. Alternativ können die Fördervorrichtungen auch mit unterschiedlichen Geschwindigkeiten angetrieben werden.

Insbesondere ist die weitere Fördervorrichtung identisch oder baugleich zu der Fördervorrichtung ausgebildet. Im Speziellen kann die weitere Fördervorrichtung zur Bildung einer Förderstrecke auch als der Kurvenabschnitt und/oder als der Steigungsabschnitt und/oder als der Gefälleabschnitt ausgebildet sein und/oder diese aufweisen.

In einer weiteren konkreten Umsetzung weist die weitere Fördervorrichtung mindestens einen weiteren Förderriemen auf. Der weitere Förderriemen ist vorzugsweise ausgebildet wie der erste bzw. der zweite Förderriemen, wobei der weitere Förderriemen besonderes bevorzugt magnetisch mit den Mitnahmeeinrichtungen koppelbar und/oder gekoppelt ist. Insbesondere wird nachfolgend von einer Förderanlage ausgegangen, wobei die Fördervorrichtung in Förderrichtung mit der weiteren Fördervorrichtung verbunden ist.

Der Förderriemen, besonders bevorzugt der erste und der zweite Förderriemen, und der weitere Förderriemen, besonders bevorzugt zwei weitere Förderriemen, sind in einem weiteren Unterbrechungsbereich umgelenkt. Insbesondere ist der Förderriemen durch den Umlenkabschnitt und/oder der weitere Förderriemen durch einen weiteren Umlenkabschnitt der weiteren Fördervorrichtung in dem weiteren Unterbrechungsbereich umgelenkt.

Mindestens eine der Mitnahmeeinrichtungen ist in dem weiteren Unterbrechungsbereich von dem Förderriemen und dem weiteren Förderriemen entkoppelt. Insbesondere ist die Mitnahmeeinrichtung in dem weiteren Unterbrechungsbereich vollständig von dem Förderriemen und dem weiteren Förderriemen entkoppelt. Vorzugsweise verlassen der Förderriemen und/oder der weitere Förderriemen in einem weiteren Austrittsbereich die Förderstrecke. Vorzugsweise werden der Förderriemen und/oder der weitere Förderriemen in einem weiteren Eintrittsbereich wieder der Förderstrecke zugeführt. Der weitere Eintrittsbereich und der weitere Austrittsbereich sind dabei in Förderrichtung voneinander beabstandet, so dass der weitere Unterbrechungsbereich gebildet ist. Besonders bevorzugt werden der weitere Eintrittsbereich und/oder der weitere Austrittsbereich durch den Umlenkabschnitt der Fördervorrichtung bzw. den weiteren Umlenkabschnitt der weiteren Fördervorrichtung definiert.

Die Mitnahmeeinrichtung ist außerhalb des weiteren Unterbrechungsbereichs mit dem Förderriemen und/oder dem weiteren Förderriemen magnetisch koppelbar und/oder gekoppelt. Insbesondere ist die Mitnahmeeinrichtung vor dem weiteren Unterbrechungsbereich mit den beiden Förderriemen und nach dem weiteren Unterbrechungsbereich mit den beiden weiteren Förderriemen magnetisch koppelbar und/oder gekoppelt. Alternativ ist die Mitnahmeeinrichtung nach dem weiteren Unterbrechungsbereich mit den beiden Förderriemen und vor dem weiteren Unterbrechungsbereich mit den beiden weiteren Förderriemen magnetisch koppelbar und/oder gekoppelt.

Vorzugsweise wird die Mitnahmeeinrichtung während eines Transports in Förderrichtung in dem weiteren Austrittsbereich von dem Förderriemen bzw. dem weiteren Förderriemen entkoppelt und in dem weiteren Eintrittsbereich wieder mit dem Förderriemen bzw. dem weiteren Förderriemen gekoppelt. Die Mitnahmeeinrichtungen weisen dabei insbesondere eine Kettenlänge auf, welche größer ist als eine Länge des weiteren Unterbrechungsbereichs, so dass mindestens eines der Kettenglieder vor dem weiteren Austrittsbereich und/oder nach dem weiteren Eintrittsbereich mit dem Förderriemen bzw. dem weiteren Förderriemen gekoppelt ist.

Während eines Betriebes der Förderanlage wird die Mitnahmeeinrichtung in Förderrichtung transportiert, wobei die Mitnahmeeinrichtung vor dem weiteren Austrittsbereich mit dem Förderriemen oder dem weitern Förderriemen gekoppelt ist. Bei Erreichen des weiteren Unterbrechungsbereichs werden die Kettenglieder nacheinander von dem Förderriemen bzw. dem weiteren Förderriemen getrennt. Durch die magnetische Kopplung vor dem weiteren Austrittsbereich wird die Mitnahmeeinrichtung in Förderrichtung weiter über den weiteren Unterbrechungsbereich geschoben. Dadurch dass die Mitnahmeeinrichtung länger ist als der weitere Unterbrechungsbereich, wird die Mitnahmeeinrichtung so lange weitergeschoben, bis die ersten Kettenglieder wieder nach dem weiteren Eintrittsbereich dem weiteren Förderriemen oder mit dem Förderriemen magnetisch koppeln. Der weitere Transport der Mitnahmeeinrichtung in Förderrichtung ist nun durch die magnetische Kopplung nach dem weiteren Eintrittsbereich sichergestellt. Insbesondere übt der Förderriemen über die magnetische und/oder reibschlüssige Kopplung vor dem weiteren Unterbrechungsbereich abschnittsweise eine Druckkraft und/oder der weitere Förderriemen nach dem weiteren Unterbrechungsbereich abschnittsweise eine Zugkraft auf die Mitnahmeeinrichtung aus, so dass eine Übergabe der Mitnahmeeinrichtung in dem weiteren Unterbrechungsbereich von dem Förderriemen auf den weiteren Förderriemen erfolgt.

Alternativ übt der weitere Förderriemen über die magnetische und/oder reibschlüssige Kopplung vor dem weiteren Unterbrechungsbereich abschnittsweise eine Druckkraft und/oder der Förderriemen nach dem weiteren Unterbrechungsbereich abschnittsweise eine Zugkraft auf die Mitnahmeeinrichtung aus, so dass eine Übergabe der Mitnahmeeinrichtung in dem weiteren Unterbrechungsbereich von dem weiteren Förderriemen auf den Förderriemen erfolgt.

In einer weiteren bevorzugten Ausbildung weist die Förderanlage mindestens eine Verbindungsschiene auf, wobei die Verbindungsschiene die Fördervorrichtung mit mindestens einer der weiteren Fördervorrichtungen verbindet, so dass die Mitnahmeeinrichtungen über die Verbindungsschiene Förderrichtung geführt sind. Die Verbindungsschiene hat die Funktion bei einer Übergabe der Mitnahmeeinrichtungen zwischen zwei Fördervorrichtungen, die Mitnahmeeinrichtung in der Förderrichtung zu führen. Vorzugsweise weist die Förderanlage mindestens zwei Verbindungsschienen auf, wobei eine erste Verbindungsschien zur Zuführung und die zweite Verbindungsschiene zur Rückführung der Mitnahmeeinrichtungen dient.

Insbesondere verbindet die Verbindungsschiene die Profilschienen der beiden Fördervorrichtungen miteinander. Vorzugsweise ist die Verbindungsschiene hierzu im Bereich des Umlenkabschnitts der Fördervorrichtung und/oder im Bereich des weiteren Umlenkabschnitts der weiteren Fördervorrichtung angeordnet. Besonders bevorzugt ist die Verbindungsschiene formschlüssig und/oder reibschlüssig und/oder kraftschlüssig und/oder stoffschlüssig mit den Profilschienen der beiden Förderrichtungen verbunden. Insbesondere weist die Verbindungsschiene den gleichen oder zumindest einen ähnlichen Querschnitt wie die Profilschienen auf, wobei die Verbindungsschiene ein Gleitlager für die Mitnahmeeinrichtungen, vorzugsweise für die Kettensegmente, in Förderrichtung bildet. Alternativ oder optional ergänzend kann die Verbindungsschiene eine Lageranordnung aufweisen, so dass die Kettensegmente über die Lageranordnung lineargeführt sind. Insbesondere ist die Lageranordnung als ein Linearlager, besonders bevorzugt als ein Linearkugellager und/oder ein Linearrollenlager, ausgebildet.

Der Förderriemen und der weitere Förderriemen verlassen in dem weiteren Unterbrechungsbereich die Verbindungsschiene und werden nach dem weiteren Unterbrechungsbereich wieder in die Verbindungsschiene zurückgeführt, wobei die Mitnahmeeinrichtungen in dem weiteren Unterbrechungsbereich weiter durch die Verbindungsschiene geführt sind. Insbesondere verlassen die Förderriemen der Fördervorrichtung oder die weiteren Förderriemen der weiteren Fördervorrichtung vor bzw. nach dem weiteren Unterbrechungsbereich die Verbindungsschiene bzw. werden der Verbindungsschiene zugeführt.

Insbesondere weist die Verbindungsschiene den weiteren Austrittsbereich und den weiteren Eintrittsbereich auf. Beispielsweise ist der weitere Eintrittsbereich und/oder der weitere Austrittsbereich durch einen Durchbruch und/oder eine schlitzförmige Öffnung und/oder einen Ausschnitt gebildet. Besonders bevorzugt ist Verbindungsschiene aus nichtmagnetischem Material, vorzugsweise aus Aluminium oder Kunststoff.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: zeigt in einer dreidimensionalen Darstellung eine Fördervorrichtung mit mehreren Mitnahmeeinrichtungen als ein Ausführungsbeispiel der Erfindung;
- Figur 2: zeigt einen Querschnitt durch die Fördervorrichtung;
- Figur 3: zeigt einen Längsschnitt durch eine der Mitnahmeeinrichtungen;
- Figur 4a: zeigt in einer Draufsicht die Mitnahmeeinrichtung in einem ersten möglichen Bewegungszustand;
- Figur 4b: zeigt in einer Seitenansicht die Mitnahmeeinrichtung in dem ersten möglichen Bewegungszustand;
- Figur 5: zeigt in einer Seitenansicht die Mitnahmeeinrichtung in einem zweiten möglichen Bewegungszustand;
- Figur 6: zeigt in einer dreidimensionalen Darstellung die Mitnahmeeinrichtung mit einem ersten und einem zweiten Trägermodul als ein erstes mögliches Ausführungsbeispiel;
- Figur 7: zeigt in einer dreidimensionalen Darstellung die Mitnahmeeinrichtung mit einer Beschichtung als ein zweites mögliches Ausführungsbeispiel;
- Figur 8: zeigt einen Längsschnitt durch eine Antriebseinrichtung der Fördervorrichtung;
- Figur 9a: zeigt in einer dreidimensionalen Darstellung eine Förderanlage mit der Fördervorrichtung und mindestens zwei weiteren Fördervorrichtungen;
- Figur 9b: zeigt in einem Längsschnitt die Förderanlage aus Figur 9a;
- Figur 10: zeigt in einer Vorderansicht die Förderanlage in einer alternativen Ausführung.

Einander entsprechende oder gleiche Teile sind in den Figuren jeweils mit den gleichen Bezugszeichen versehen.

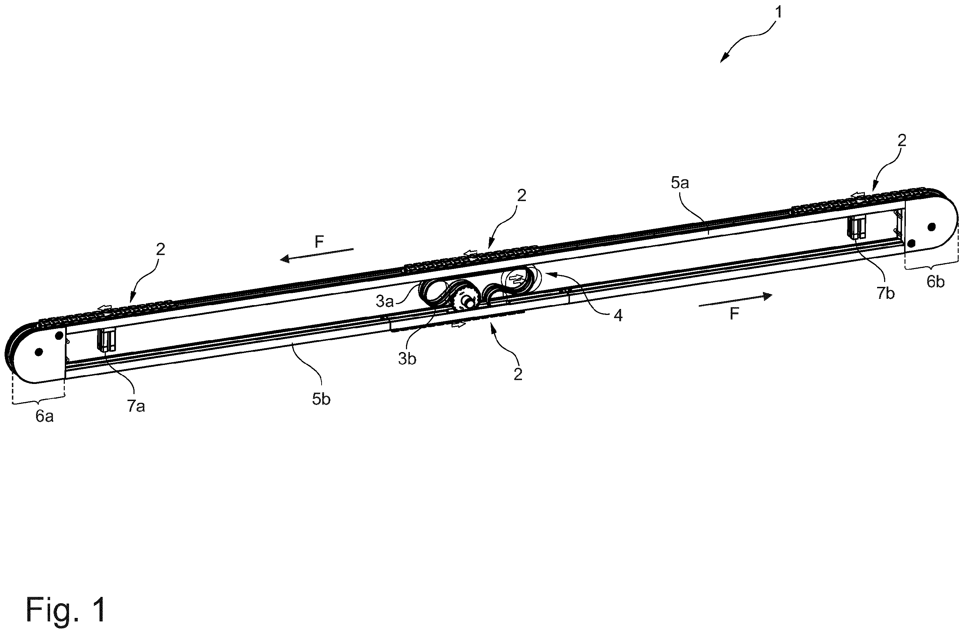

Figur 1 zeigt in einer dreidimensionalen Darstellung eine Fördervorrichtung 1. Die Fördervorrichtung 1 ist beispielsweise als ein Taktförderer und/oder als ein Stauförderer ausgebildet. Hierzu weist die Fördervorrichtung 1 mehrere, z.B. vier, voneinander getrennte Mitnahmeeinrichtungen 2 zur Aufnahme eines Förderguts auf. Die Fördervorrichtung 1 weist einen ersten und einen zweiten Förderriemen 3a, b auf, wobei die beiden Förderriemen 3a, b endlos umlaufend ausgebildet sind. Beispielsweise sind die beiden Förderriemen 3a, b als Zahnriemen ausgebildet. Die beiden Förderriemen 3a, b sind über eine Antriebseinrichtung 4 geführt, wobei die Antriebseinrichtung 4 die Förderriemen 3a, b in einer Förderrichtung F antreibt. Die Mitnahmeeinrichtungen 2 sind mit dem ersten und dem zweiten Förderriemen 3a, b gekoppelt, so dass diese in der Förderrichtung F durch die Förderriemen 3a, b mitgenommen werden.

Die Fördervorrichtung 1 weist eine erste und eine zweite Profilschiene 5a, b zur Führung der Mitnahmeeinrichtungen 2 auf. Beispielsweise dient die erste Profilschiene 5a dabei als Zuführung und die zweite Profilschiene 5b als Rückführung für die Mitnahmeeinrichtungen 2. Die beiden Profilschienen 5a, b sind jeweils an einer Endseite über einen Umlenkabschnitt 6a, b miteinander verbunden, so dass die Mitnahmeeinrichtungen 2 umlaufend in der Förderrichtung F transportierbar sind.

Die Mitnahmeeinrichtungen 2 sind flexibel ausgebildet, so dass sich die Mitnahmeeinrichtungen 2 entlang einer Kurve, insbesondere im Bereich der beiden Umlenkabschnitte 6a, b, an eine Kurvenkrümmung der Kurve anpassen. Die Mitnahmeeinrichtungen 2 sind in dem gezeigten Ausführungsbeispiel als Kettensegmente ausgebildet. Beispielsweise können die Mitnahmeeinrichtungen 2 jedoch auch aus einen flexiblen Material z.B. als Riemenabschnitte etc. gebildet sein.

Die Fördervorrichtung 1 weist eine erste und einen zweite Stoppeinrichtung 7a, b auf. Die beiden Stoppeinrichtungen 7a, b sind beide mit der ersten Profilschiene 5a verbunden und/oder in diese integriert. Die erste Stoppeinrichtung 7a ist im Bereich des ersten Umlenkabschnitts 6a und die zweite Stoppeinrichtung 7b im Bereich des zweiten Umlenkabschnitts 7b angeordnet. Die beiden Stoppeinrichtungen 7a, b dienen dazu jeweils mindestens eine der Mitnahmeeinrichtungen 2 selektiv in Förderrichtung F anzuhalten bzw. abzurufen. Beispielsweise kann dadurch ein Stau der Mitnahmeeinrichtungen 2 erzeugt und/oder ein Abstand zwischen den einzelnen Mitnahmeeinrichtungen 2 eingestellt werden. Dabei laufen die Förderriemen 3a, b kontinuierlich weiter, so dass die Mitnahmeeinrichtungen 2, welche nicht durch die Stoppeinrichtungen 7a, b gestoppt sind, in Förderrichtung F weiter transportiert werden.

Beispielsweise sind die Stoppeinrichtungen 7a, b als Druckluftzylinder und/oder als Magnetspulenstopper ausgebildet, wobei die Kolbenstange des Druckluftzylinders ein Stoppelement bildet. Bei Aktivierung der Stoppeinrichtungen 7a, b ist das Stoppelement so weit ausgefahren, dass mindestens eine der Mitnahmeeinrichtungen 2 in Förderrichtung blockiert ist. Bei Deaktivierung der Stoppeinrichtungen 7a, b sind die Mitnahmeeinrichtungen 2 in Förderrichtung F ungehindert transportierbar.

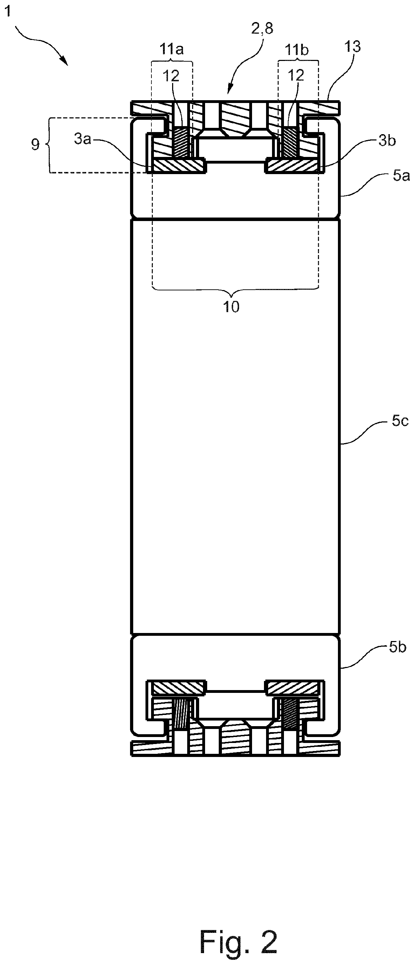

Figur 2 zeigt einen Querschnitt durch die Fördervorrichtung 1, insbesondere durch ein Kettenglied 8 der Mitnahmeeinrichtung 2. Die beiden Profilschienen 5a, b sind über ein Zwischenprofil 5c miteinander verbunden, wobei das Zwischenprofil 5c die beiden Profilschienen 5a, b voneinander beabstandet. Die beiden Profilschienen 5a, b weisen jeweils einen Führungsabschnitt 9 zur Führung der Mitnahmeeinrichtungen 2 und einen Schienenabschnitt 10 zur Führung der beiden Förderriemen 3a, b auf.

Die Profilschienen 5a, b weisen ein C-förmiges Profil auf, wobei die beiden Endbereiche des Profils zueinander hin, z.B. rechtwinklig, abgewinkelt sind. Das Kettenglied 8 ist in dem Querschnitt betrachtet annährend T-förmig ausgebildet und bildet im Bereich des Führungsabschnitts 9 einen Konturpartner zu den Profilschienen 5a, b, so dass das Kettenglied 8 formschlüssig in dem Führungsabschnitt 9 in Förderrichtung F geradgeführt ist. Die beiden Förderriemen 3a, b sind parallel zueinander in dem Schienenabschnitt 10 in Förderrichtung F geführt und durch einen in Förderrichtung F verlaufenden Steg voneinander beabstandet.

Das Kettenglied 8 weist einen ersten und einen zweiten Auflageabschnitt 11a, b auf. Der erste Auflageabschnitt 11a liegt dabei auf dem ersten Förderriemen 3a und der zweite Auflageabschnitt 11b auf dem zweiten Förderriemen 3b flächig auf.

Die beiden Auflageabschnitte 11a, b weisen jeweils einen Magneten 12, beispielsweise einen Permanentmagneten, auf. In den beiden Förderriemen 3a, b ist ein ferromagnetisches Material z.B. Verstärkungsdrähte, welche in Förderrichtung F ausgerichtet sind, eingebettet. Durch die Magneten 12 wird eine kraftschlüssige magnetische Kopplung der Mitnahmeeinrichtung 2 mit den beiden Förderriemen 3a, b erzeugt, so dass die Mitnahmeeinrichtungen 2 in Förderrichtung F mitgenommen werden und zusätzlich gegen ein Abheben, z.B. bei Kurvenfahrten, gesichert sind. Insbesondere bei der Rückführung und/oder bei einer Kopfüberfahrt der Mitnahmeeinrichtungen 2 wird durch die magnetische Kopplung ein Transport der Mitnahmeeinrichtungen 2 durch die beiden Förderriemen 3a, b sichergestellt.

Das Kettenglied 8 weist eine Förderfläche 13 auf, wobei die Förderfläche 13 eine Auflage z.B. für einen Werkstückträger, ein Werkstück etc. bildet. Die Förderfläche 13 erstreckt sich dabei mindestens über die gesamte Breite der Profilschienen 5a, b.

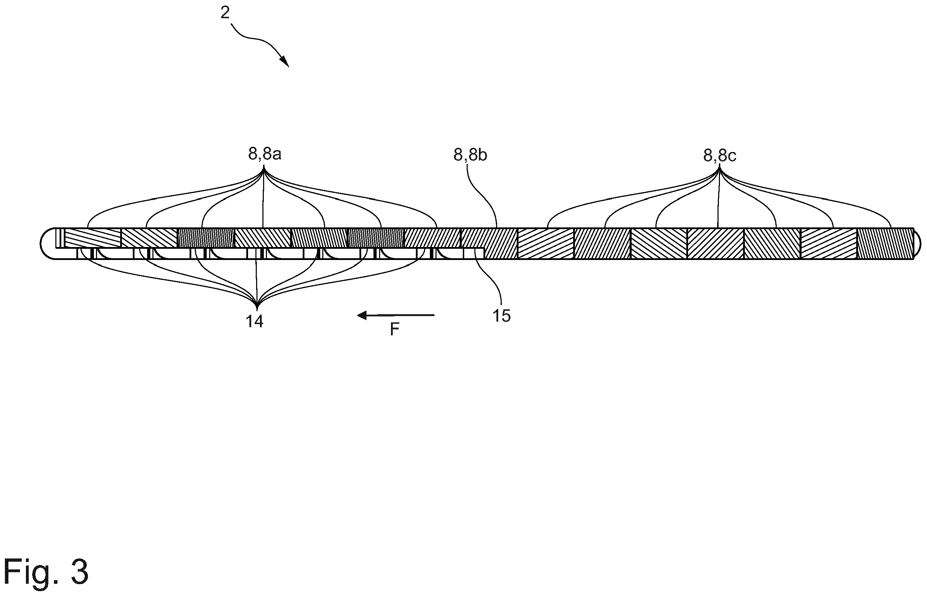

Figur 3 zeigt einen Längsschnitt durch eine der Mitnahmeeinrichtungen 2, wobei die Mitnahmeeinrichtung 2 durch mehrere gelenkig miteinander verbundene Kettenglieder 8 gebildet ist. Die Mitnahmeeinrichtung 2 weist dabei mehrere Einlaufglieder 8a, ein Stopperglied 8b sowie mehrere Förderglieder 8c auf. Dabei sind die Kettenglieder 8 beispielsweise aus Kunststoff gefertigt. Die Kettenglieder 8 sind in einer Grobform baugleich, wobei sich die einzelnen Kettenglieder 8 an ihrer Unterseite konstruktiv und funktional unterscheiden.

Die Einlaufglieder 8a weisen hierzu an ihrer Unterseite eine in Förderrichtung F verlaufende Einlaufnut 14 auf, wobei die Einlaufnut 14 mittig zwischen den beiden Auflageabschnitten 11a, b, wie in Figur 2 dargestellt, angeordnet ist. Bei Erreichen einer der aktivierten Stoppeinrichtungen 7a, b laufen die Einlaufglieder 8a ungehindert über die Stoppeinrichtung 7a, b bzw. das ausgefahrene Stoppelement, so dass eine in Förderrichtung F durch die Einlaufglieder 8a definierte Länge nach der Stoppeinrichtung 7a, b zur Verfügung gestellt wird.

Das Stopperglied 8b weist an seiner Unterseite eine zumindest teilweise in Förderrichtung F verlaufende Anschlagnut 15 auf, wobei die Anschlagnut 15 mittig zwischen den beiden Auflageabschnitten 11a, b, wie in Figur 2 dargestellt, angeordnet ist und, insbesondere in einem Querschnitt betrachtet, die gleiche Breite wie die Einlaufnut 14 aufweist. Beim Erreichen einer der aktivierten Stoppeinrichtungen 7a, b bzw. des ausgefahrenen Stoppelements, definiert die Anschlagnut 15 einen Anschlag in Förderrichtung F, so dass die Mitnahmeeinrichtung 2 in der Förderrichtung F blockiert ist. Durch Deaktivierung der Stoppeinrichtung 7a, b wird die Mitnahmeeinrichtung 2 freigegeben und kann weiter in Förderrichtung F transportiert werden.

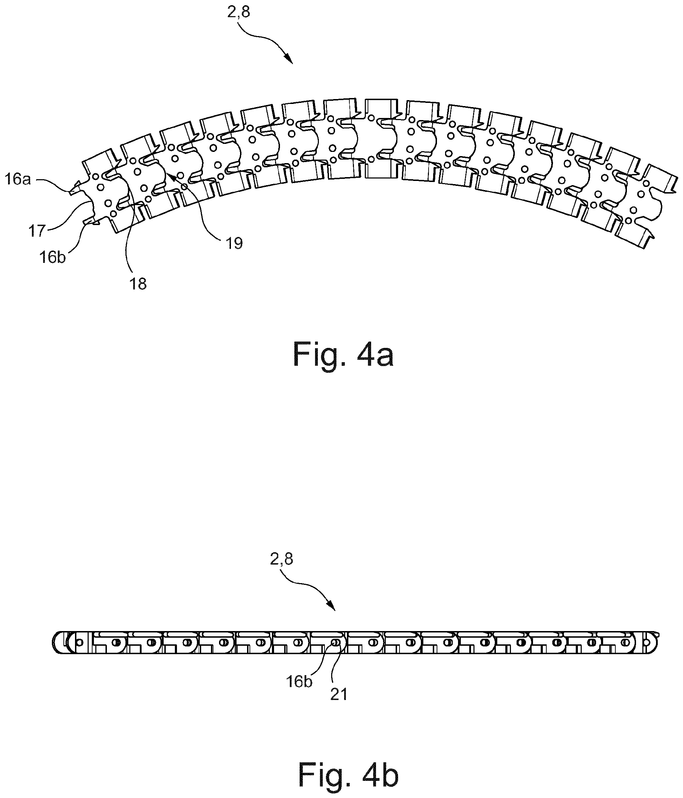

Figur 4a zeigt in einer Draufsicht die Mitnahmeeinrichtung 2 in einem ersten möglichen Bewegungszustand, wobei die Kettenglieder 8 derart gegeneinander verdreht sind, so dass sich das Kettensegment z.B. einem Kurvenabschnitt anpasst. Die Kettenglieder 8 sind lösbar über eine Schnappverbindung miteinander verbunden, so dass weitere Kettenglieder angefügt oder bereits montierte Kettenglieder 8 entfernt werden können. Somit lässt sich die Kettenlänge der Mitnahmeeinrichtung 2 beliebig variieren. Jedes der Kettenglieder 8 weist hierzu jeweils zwei Schnapphaken 16a, b sowie einen konkaven und einen konvexen Gelenkabschnitt 17, 18 auf. Die Kettenglieder 8 sind in der Draufsicht annähernd identisch ausgebildet, wobei jeweils der konvexe Gelenkabschnitt 18 eines Kettengliedes 8 in dem konkaven Gelenkabschnitt 17 des nachfolgenden Kettengliedes 8 aufgenommen ist, so dass ein erstes Drehgelenk 19, als das Drehgelenk, gebildet ist. Die beiden Gelenkabschnitte 17, 18 haben außerdem die Funktion, einen Anschlag in Förderrichtung F zu bilden, so dass die Kettenglieder 8 gleichmäßig voneinander beabstandet sind.

Figur 4b zeigt die Mitnahmeeinrichtung 2 in dem ersten möglichen Bewegungszustand aus der Figur 4a in einer Seitenansicht. Jedes der Kettenglieder 8 weist jeweils zwei Schnapphakenaufnahmen 21 auf, wobei die Schnapphakenaufnahmen 21 als Langlöcher ausgebildet sind und gegenüberliegen an der Innenseite der Kettenglieder 8 angeordnet sind. Der erste und der zweite Schnapphaken 16a, b ist jeweils in einer Schnapphakenaufnahme 21 mit Spiel aufgenommen, so dass die Kettenglieder 8 über eine Drehbewegung gegeneinander verdrehbar sind, wobei ein Drehpunkt in dem ersten Drehgelenk 19 liegt. Alternativ können die Schnapphakenaufnahmen 21 auch als runde Bohrungen ausgebildet sein, wobei die Schnapphaken 16a, b formschlüssig in den Schnapphakenaufnahmen 21 aufgenommen sind, so dass eine Verdrehung der Kettenglieder 8 verhindert wird.

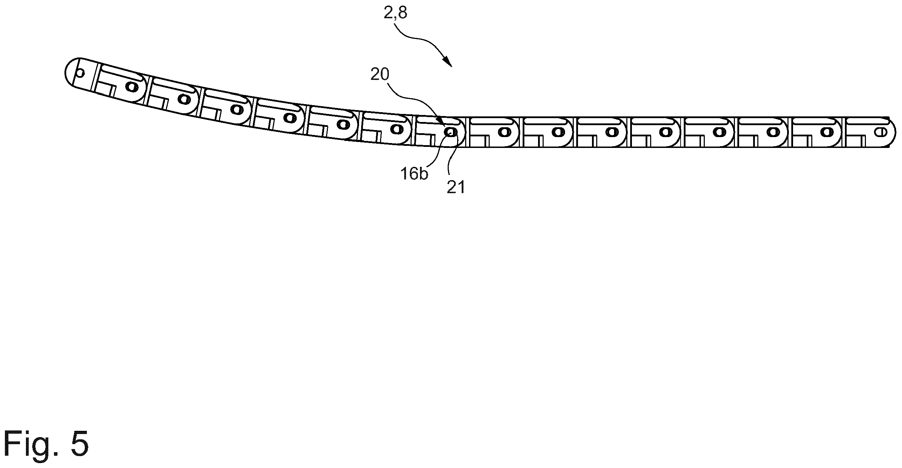

Figur 5 zeigt in einer Seitenansicht die Mitnahmeeinrichtung 2 in einem zweiten möglichen Bewegungszustand, wobei die Kettenglieder 8 derart gegeneinander verschwenkt sind, so dass sich das Kettensegment z.B. einem Steigungs- oder Gefälleabschnitt anpasst. Optional ergänzend kann der Steigungs- bzw. der Gefälleabschnitt auch als ein Kurvenabschnitt ausgebildet sein, so dass z.B. eine geneigte Kurve gebildet ist. Die Schnapphaken 16a, b sind jeweils in den Schnapphakenaufnahmen 21 aufgenommen, so dass ein zweites Drehgelenk 20 gebildet ist. Die Kettenglieder 8 sind über eine Schwenkbewegung gegeneinander verschwenkbar, wobei dabei der Drehpunkt in dem zweiten Drehgelenk 20 und ggf. in dem ersten Drehgelenk 19 liegt.

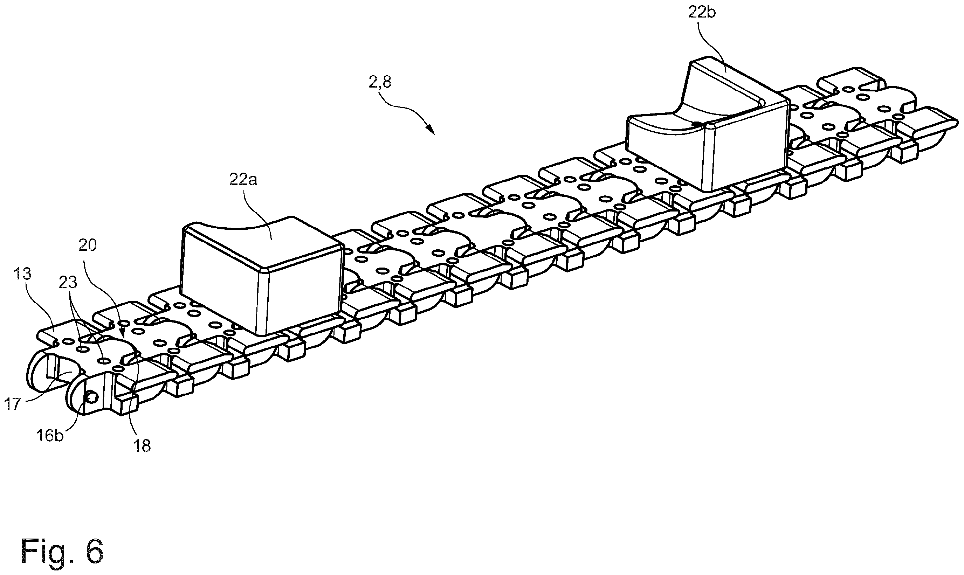

Figur 6 zeigt in einer dreidimensionalen Darstellung die Mitnahmeeinrichtung 2 in einem ersten möglichen Ausführungsbeispiel der Erfindung. Hierzu weist die Mitnahmeeinrichtung 2 ein erstes und ein zweites Trägermodul 22a, b auf. Die Trägermodule 22a, b dienen insbesondere zur Aufnahme des Förderguts, beispielsweise ein Karosseriebauteil, ein Werkstück, eine Palette, etc. Die Trägermodule 22a, b weisen dabei eine Teilkontur des Förderguts auf, so dass das Fördergut formschlüssig zwischen den beiden Trägermodulen 22a, b anordbar ist.

Die Kettenglieder 8 weisen an ihrer Oberseite in die Förderfläche 13 eingebrachte Befestigungsmittelaufnahmen 23 zur Aufnahme eines Befestigungsmittels auf. Die Befestigungsmittelaufnahmen 23 sind beispielsweise als Durchgangsbohrungen oder Sacklochbohrungen ausgebildet. Beispielsweise kann das Befestigungsmittel als eine Senkkopfschraube ausgebildet sein, wobei die Senkkopfschraube von der Unterseite der Kettenglieder 8 über die Befestigungsmittelaufnahme 23 in das erste bzw. das zweite Trägermodul 22a, b eingeschraubt wird, so dass das erste bzw. das zweite Trägermodul 22a, b kraftschlüssig mit mindestens einem der Kettenglieder 8 verbunden ist und/oder auf der Förderfläche 13 aufliegt.

Alternativ können die Trägermodule 22a, b auch angegossene Zapfen aufweisen, wobei das erste bzw. das zweite Trägermodul 22a, b über die Zapfen in die Befestigungsmittelaufahmen 23 einsteckbar sind, so dass das erste bzw. das zweite Trägermodul 22a, b reibschlüssig und/oder formschlüssig mit mindestens einem der Kettenglieder 8 und/oder der Förderfläche 13 verbunden ist.

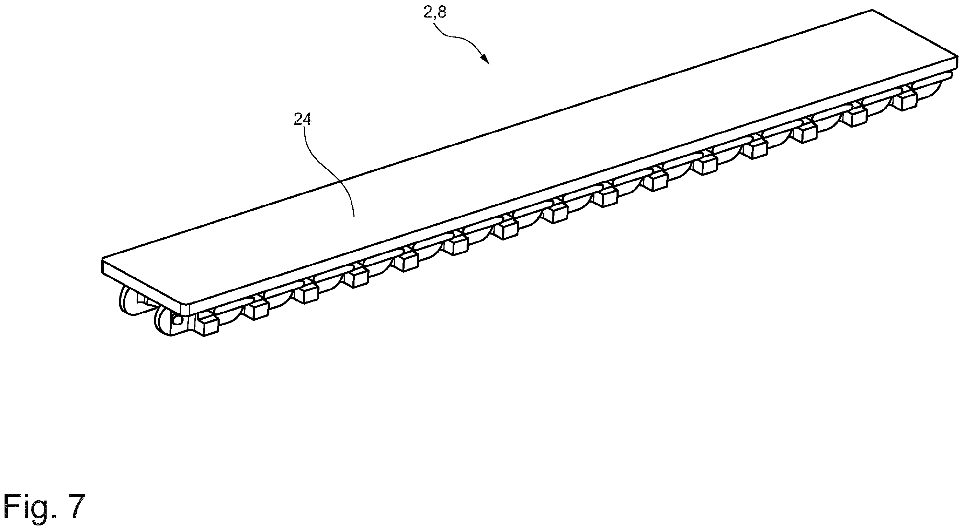

Figur 7 zeigt in einer dreidimensionalen Darstellung die Mitnahmeeinrichtung 2 in einem zweiten möglichen Ausführungsbeispiel der Erfindung. Hierzu weist die Mitnahmeeinrichtung 2 eine Beschichtung 24 auf. Die Beschichtung 24 dient insbesondere zur Aufnahme des Förderguts, wobei die Beschichtung 24 mindestens auf der Förderfläche 13 aufliegt oder sich seitliche über diese weiter erstreckt, so dass eine vergrößerte Auflagefläche für das Fördergut gebildet ist. Die Beschichtung 24 ist beispielsweise eine rutschfeste, z.B. gummierte, Beschichtung ausgebildet, so dass das Fördergut reibschlüssig auf der Beschichtung 24 anordbar ist. Die Beschichtung 24 erstreckt sich in Förderrichtung F vollständig über die gesamte Länge der Mitnahmeeinrichtung 2, wobei die Beschichtung 24 aus einem elastischen Material ist, so dass eine Kurvenfahrt ermöglicht wird.

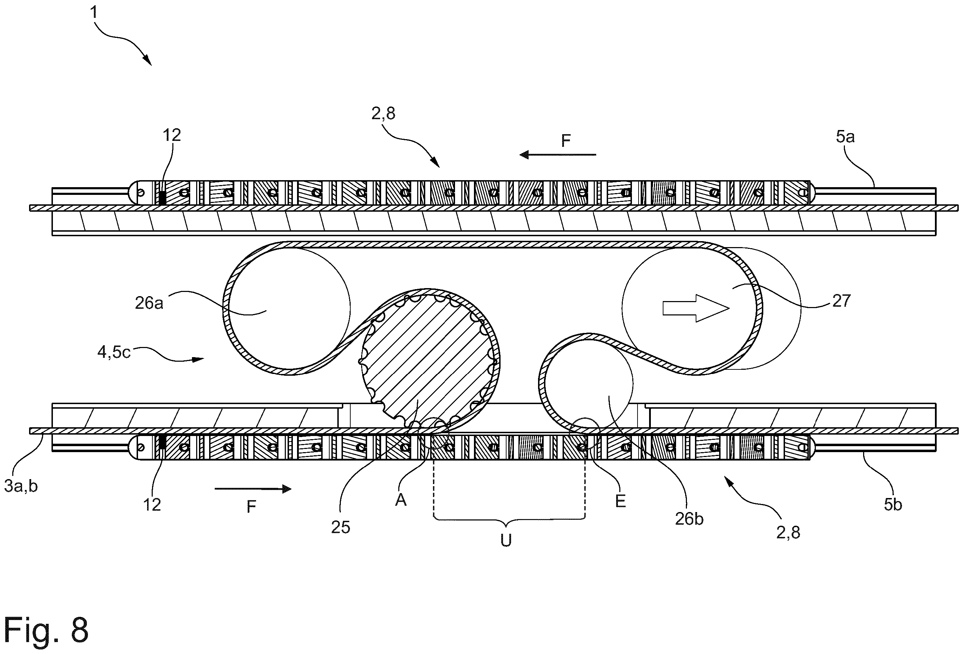

Figur 8 zeigt einen Teilausschnitt der Fördervorrichtung 1 in einem Längsschnitt, insbesondere durch die Antriebseinrichtung 4. Die Antriebseinrichtung 4 ist zwischen den beiden Profilschienen 5a, b angeordnet und in das Zwischenprofil 5c integriert. Die Antriebseinrichtung 4 weist ein Antriebsrad 25, eine erste und eine zweite Umlenkrolle 26a, b sowie eine Spannrolle 27 auf. Die Antriebsrolle 25 ist als ein Zahnrad ausgebildet, wobei der erste und/oder der zweite Förderriemen 3a, b mit der Antriebsrolle 25 in Eingriff steht. Die Antriebsrolle 25 ist beispielsweise mit einem Elektromotor verbunden, wobei ein Drehmoment des Elektromotors über die Antriebsrolle 25 auf den ersten und/oder der zweiten Förderriemen 3a, b übertragen wird.

Die beiden Umlenkrollen 26a, b sowie die Spannrolle 27 sind beispielsweise als Zylinderrollen mit einer glatten Außenmantelfläche ausgebildet. Die Spannrolle 27 ist beispielsweise in axialer Richtung in Bezug auf die Förderrichtung F verstellbar oder federnd ausgebildet, so dass die beiden Förderriemen 3a, b mit einer Spannkraft beaufschlag werden. Beispielsweise kann die Antriebseinrichtung 4 eine weitere Spannrolle aufweisen, wobei jedem Förderriemen 3a, b eine separate Spannrolle zugeordnet ist, so dass die beiden Förderriemen 3a, b unabhängig voneinander gespannt werden können.

Der erste und der zweite Förderriemen 3a, b verlassen im Bereich des Antriebsrades 25 in einem Austrittsbereich A die zweite Profilschiene 5b, wobei die beiden Förderriemen 3a, b über das Antriebsrad 25, die erste Umlenkrolle 26a, die Spannrolle 27 zu der zweiten Umlenkrolle 26b verlaufen bzw. diese dabei umschlingen und anschließend im Bereich der zweiten Umlenkrolle 26b in einem Eintrittsbereich E wieder in die zweite Profilschiene 5b zurückgeführt werden. Insbesondere umschlingen die beiden Förderriemen 3a, b die Rollen 25, 26a, b, 27 jeweils mit einem Umschlingungswinkel, welcher größer oder gleich 180° ist. Zwischen dem Austrittsbereich A und dem Eintrittsbereich E der beiden Förderriemen 3a, b ist in Förderrichtung F ein Unterbrechungsbereich U gebildet und/oder angeordnet. In dem Unterbrechungsbereich U wird die Mitnahmeeinrichtung 2 lediglich durch die zweite Profilschiene 5b geführt, wobei die Kettenglieder 8 in dem Unterbrechungsbereich U vollständig von den beiden Förderriemen 3a, b getrennt sind.

Die Mitnahmeeinrichtungen 2 weisen eine Kettenlänge auf, welche größer ist als eine Erstreckung des Unterbrechungsbereichs U in Förderrichtung F. Während eines Transports der Mitnahmeeinrichtung 2 in dem Unterbrechungsbereich U ist mindestens eines der Kettenglieder 8 über die Magneten 12 mit dem ersten und/oder dem zweiten Förderriemen 3a, b magnetisch gekoppelt.

Während eines Betriebes der Fördervorrichtung 1 wird die Mitnahmeeinrichtung 2 in Förderrichtung F transportiert, wobei die Mitnahmeeinrichtung 2 vor dem Austrittsbereich A mit den beiden Förderriemen 3a, b gekoppelt ist. Bei Erreichen des Unterbrechungsbereichs U werden die Kettenglieder 8 nacheinander von den beiden Förderriemen 3a, b getrennt. Durch die magnetische Kopplung wird die Mitnahmeeinrichtung 2 in Förderrichtung F weitergeschoben und zugleich durch die zweite Profilschiene 5b in dem Unterbrechungsbereich U geführt. Dadurch dass die Mitnahmeeinrichtung 2 länger ist als der Unterbrechungsbereich U, wird die Mitnahmeeinrichtung 2 so lange weitergeschoben, bis die ersten Kettenglieder 8 wieder nach dem Eintrittsbereich E mit den beiden Förderriemen 3a, b magnetisch koppeln. Der weitere Transport in Förderrichtung F der Mitnahmeeinrichtung 2 ist nun durch die magnetische Kopplung nach dem Eintrittsbereich E sichergestellt.

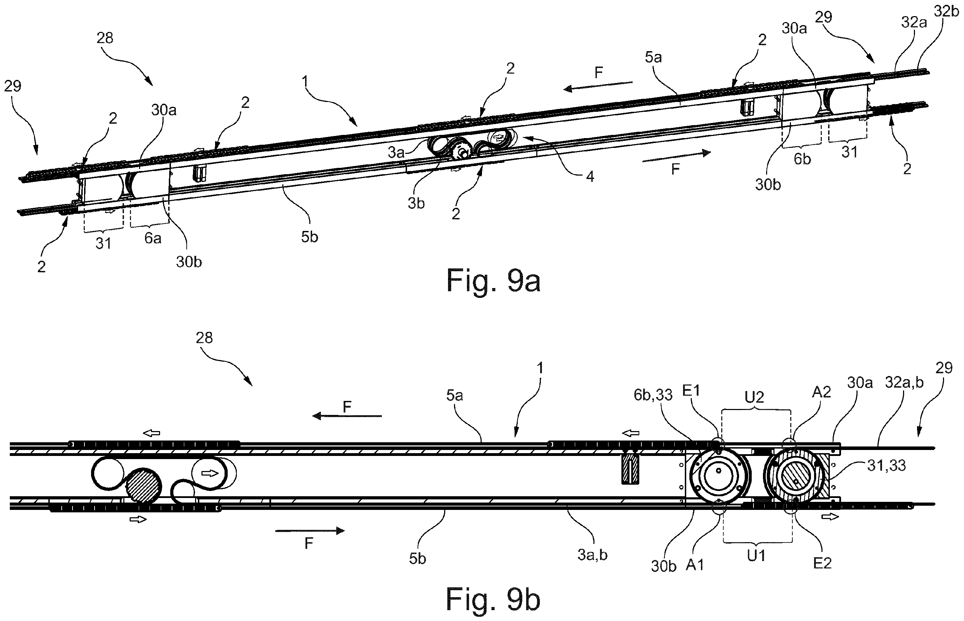

Figur 9a zeigt in einer dreidimensionalen Darstellung eine Förderanlage 28 mit der Fördervorrichtung 1 und mindestens zwei weiteren Fördervorrichtungen 29. Die beiden weiteren Fördervorrichtungen 29 sind jeweils mit der Fördervorrichtung 1 verbunden. Hierzu weist die Förderanlage 28 jeweils pro Seite eine erste und eine zweite Verbindungsschiene 30a, b auf. Die erste bzw. die zweite Verbindungsschiene 30a, b verbindet die erste bzw. die zweite Profilschiene 5a, b mit jeweils einer weiteren Profilschiene, nicht dargestellt, der weiteren Fördervorrichtungen 29. Insbesondere verbinden die beiden Verbindungsschienen 30a, b jeweils den ersten bzw. den zweiten Umlenkabschnitt 6a, b mit einem weiteren Umlenkabschnitt 31 der weiteren Fördervorrichtungen 29. Beispielsweise weisen die Verbindungsschienen 30a, b in einem Querschnitt betrachtet, das gleich Profil auf, wie die beiden Profilschienen 5a, b. Die erste bzw. die zweite Verbindungsschiene 30a, b sind z.B. über eine Schraubverbindung und/oder eine Steckverbindung mit der ersten bzw. der zweiten Profilschiene 5a, b und den weiteren Profilschienen verbunden.

Durch die Verbindungsschienen 30a, b werden die Mitnahmeeinrichtungen 2 in Förderrichtung F geführt, wobei eine Übergabe zwischen der Fördervorrichtung 1 und den weiteren Fördervorrichtungen 29 erfolgt. Die weiteren Fördervorrichtungen 29 weisen hierzu jeweils zwei weitere Förderriemen 32a, b auf, welche ebenfalls ein ferromagnetisches Material aufweisen, so dass die Mitnahmeeinrichtungen 2 magnetisch koppelbar sind. Beispielsweise sind die weiteren Fördervorrichtungen 29 baugleich oder identisch zu der Fördervorrichtung 1 ausgebildet. Alternativ können die weiteren Fördervorrichtungen 29 auch als Kurven- und/oder Steigungs- und/oder Gefälleabschnitte ausgebildet sein und/oder diese aufweisen.

Figur 9b zeigt in einem Längsschnitt die Förderanlage 28. Die Umlenkabschnitte 6a, b, 31 sind jeweils durch eine endseitig angeordnete weitere Umlenkrolle 33 gebildet. Die beiden Förderriemen 3a, b und/oder die beiden weiteren Förderriemen 32a, b umschlingen dabei die weiteren Umlenkrolle 33 der Umlenkabschnitte 6a, b bzw. der Umlenkabschnitte 33 in einem Umschlingungswinkel von 180°, so dass die Förderriemen 3a, b bzw. 32a, b umgelenkt werden und in einer Gegenrichtung zurückgeführt werden.

In der gezeigten Darstellung verlassen der erste und der zweite Förderriemen 3a, b im Bereich des zweiten Umlenkabschnitts 6b in einem ersten Austrittsbereich A1, als weiterer Austrittsbereich, die zweite Verbindungsschiene 30b, wobei die beiden Förderriemen 3a, b über die weitere Umlenkrolle 33 des zweiten Umlenkabschnitts 6b verlaufen bzw. diese dabei umschlingen und anschließend in einem ersten Eintrittsbereich E1, als weiterer Eintrittsbereich, wieder in die erste Verbindungsschiene 30a zurückgeführt werden. Die beiden weiteren Förderriemen 32a, b verlassen im Bereich des weiteren Umlenkabschnitts 31 in einem zweiten Austrittsbereich A2, als weiterer Austrittsbereich, die erste Verbindungsschiene 30a, wobei die beiden Förderriemen 3a, b über die weitere Umlenkrolle 33 des weiteren Umlenkabschnitts 31 verlaufen bzw. diese dabei umschlingen und anschließend in einem zweiten Eintrittsbereich E2, als weiterer Eintrittsbereich, wieder in die zweite Verbindungsschiene 30b zurückgeführt werden.

Zwischen dem ersten Austrittsbereich A1 und dem zweiten Eintrittsbereich E2 ist in Förderrichtung F ein erster Unterbrechungsbereich U1, als ein weiterer Unterbrechungsbereich, gebildet und/oder angeordnet. Zwischen dem zweiten Austrittsbereich A2 und dem ersten Eintrittsbereich E1 ist in Förderrichtung F ein zweiter Unterbrechungsbereich U2, als ein weiterer Unterbrechungsbereich, gebildet und/oder angeordnet. In den beiden Unterbrechungsbereichen U1, U2 werden die Mitnahmeeinrichtungen 2 lediglich durch die erste bzw. die zweite Verbindungsschiene 30a, b geführt, wobei die Kettenglieder 8 in den beiden Unterbrechungsbereichen U1, U2 vollständig von den beiden Förderriemen 3a, b getrennt sind.

Die Mitnahmeeinrichtungen 2 weisen eine Kettenlänge auf, welche größer ist als die Erstreckung der Unterbrechungsbereiche U1, U2 in Förderrichtung F. Während eines Transports der Mitnahmeeinrichtung 2 in den Unterbrechungsbereichen U1, U2 ist mindestens eines der Kettenglieder 8 über die Magneten 12 mit den beiden Förderriemen 3a, b und/oder den beiden weiteren Förderriemen 32a, b magnetisch gekoppelt.

Während eines Betriebes der Förderanlage 28 werden die Mitnahmeeinrichtungen 2 in Förderrichtung F transportiert, wobei die Mitnahmeeinrichtungen 2 vor dem ersten bzw. dem zweiten Austrittsbereich A1, A2 mit den beiden Förderriemen 3a, b bzw. den beiden weiteren Förderriemen 32a, b gekoppelt sind. Bei Erreichen des ersten bzw. des zweiten Unterbrechungsbereichs U1, U2 werden die Kettenglieder 8 nacheinander von den beiden Förderriemen 3a, b bzw. den beiden weiteren Förderriemen 32a, b getrennt.

Durch die magnetische Kopplung wird die Mitnahmeeinrichtung 2 in Förderrichtung F weitergeschoben und zugleich durch die erste bzw. die zweite Verbindungsschiene 30a, b in dem ersten bzw. dem zweiten Unterbrechungsbereich U1, U2 geführt. Dadurch dass die Mitnahmeeinrichtung 2 länger ist als die beiden Unterbrechungsbereiche U1, U2, wird die Mitnahmeeinrichtung 2 so lange weitergeschoben, bis die ersten Kettenglieder 8 wieder nach dem ersten bzw. dem zweiten Eintrittsbereich E1, E2 mit den beiden Förderriemen 3a, b bzw. den beiden weiteren Förderriemen 32a, b magnetisch koppeln. Der weitere Transport in Förderrichtung F der Mitnahmeeinrichtung 2 ist nun durch die magnetische Kopplung nach dem ersten bzw. den zweiten Eintrittsbereich E1, E2 sichergestellt.

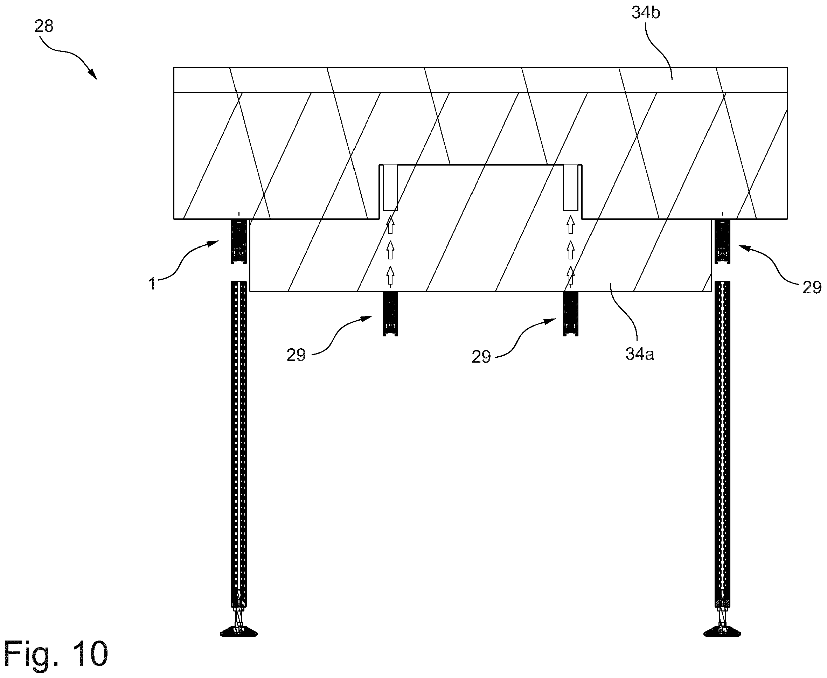

Figur 10 zeigt in einer Vorderansicht die Förderanlage 28 als ein weiteres Ausführungsbeispiel der Erfindung. Die Förderanlage 28 weist hierzu die Fördervorrichtung 1 sowie mindestens drei weitere Fördervorrichtungen 29 auf. Die Fördervorrichtungen 1, 29 sind parallel zueinander angeordnet und gleichmäßig voneinander beabstandet. Die Förderanlage 28 weist, nur schematisch angedeutet, ein erstes und ein zweites Fördergut 33a, b auf. Die beiden Fördergüter 33a, b weisen eine unterschiedliche Form und/oder Abmessungen auf. Beispielsweise können die Fördergüter 33a, b nacheinander oder alternativ entweder nur das erste oder nur das zweite Fördergut 33a, b durch die Förderanlage 28 transportiert werden. Die beiden mittleren Fördervorrichtungen 29 sind in ihrer Höhe verstellbar, so dass die Förderanlage 28 an das erste bzw. das zweite Fördergut 33a, b anpassbar ist, so dass eine optimale Lastverteilung auf die vier Fördervorrichtungen 1, 29 erfolgt.

### Bezugszeichenliste

- 1: Fördervorrichtung
- 2: Mitnahmeeinrichtung
- 3a: erster Förderriemen
- 3b: zweiter Förderriemen
- 4: Antriebseinrichtung
- 5a: erste Profilschiene
- 5b: zweite Profilschiene
- 5c: Zwischenprofil
- 6a: erster Umlenkabschnitt
- 6b: zweiter Umlenkabschnitt
- 7a: erste Stoppeinrichtung
- 7b: zweite Stoppeinrichtung
- 8: Kettenglieder
- 8a: Einlaufglied
- 8b: Stopperglied
- 8c: Förderglied
- 9: Führungsabschnitt
- 10: Schienenabschnitt
- 11a: erster Auflageabschnitt
- 11b: zweiter Auflageabschnitt
- 12: Magnet
- 13: Förderfläche
- 14: Einlaufnut
- 15: Anschlagnut
- 16a: erster Schnapphaken
- 16b: zweiter Schnapphaken
- 17: konkaver Gelenkabschnitt
- 18: konvexer Gelenkabschnitt
- 19: erstes Drehgelenk
- 20: zweites Drehgelenk
- 21: Schnapphakenaufnahme
- 22a: erstes Trägermodul
- 22b: zweites Trägermodul
- 23: Befestigungsmittelaufnahme
- 24: Beschichtung
- 25: Antriebsrolle
- 26a: erste Umlenkrolle
- 26b: zweite Umlenkrolle
- 27: Spannrolle
- 28: Förderanlage
- 29: weitere Fördervorrichtung
- 30a: erste Verbindungsschiene
- 30b: zweite Verbindungsschiene
- 31: weiterer Umlenkabschnitt
- 32a: weiterer Förderriemen
- 32b: weiterer Förderriemen
- 33: weitere Umlenkrolle
- 34a: erstes Fördergut
- 34b: zweites Fördergut

- A: Austrittsbereich
- A1: erster Austrittsbereich
- A2: zweiter Austrittsbereich
- E: Eintrittsbereich
- E1: erster Eintrittsbereich
- E2: zweiter Eintrittsbereich
- U: Unterbrechungsbereich
- U1: erster Unterbrechungsbereich
- U2: zweiter Unterbrechungsbereich
- F: Förderrichtung

## Patentansprüche

1. Fördervorrichtung (1),
mit mehreren voneinander getrennten Mitnahmeeinrichtungen (2) zum Transport mindestens eines Förderguts (34a, b), wobei die Mitnahmeeinrichtungen (2) flexibel ausgebildet sind, so dass sich die Mitnahmeeinrichtungen (2) entlang einer Kurve an eine Kurvenkrümmung der Kurve anpassen,
mit mindestens einem endlos umlaufenden ersten Förderriemen (3a), wobei der erste Förderriemen (3a) in einem Unterbrechungsbereich (U) in einer Förderrichtung (F) umgelenkt ist,
mit mindestens einer Antriebseinrichtung (4), wobei die Antriebseinrichtung (4) den ersten Förderriemen (3a) in der Förderrichtung (F) antreibt, wobei jede der Mitnahmeeinrichtungen (2) mindestens einen Magneten (12) aufweist, wobei der erste Förderriemen (3a) ferromagnetisch ausgebildet ist oder ein ferromagnetisches Material aufweist, so dass die Mitnahmeeinrichtungen (2) mit dem ersten Förderriemen (3a) magnetisch koppelbar sind, und wobei die Mitnahmeeinrichtungen (2) in einem gekoppelten Zustand durch den ersten Förderriemen (3a) in der Förderrichtung (F) mitgenommen werden,
**dadurch gekennzeichnet, dass**
der erste Förderriemen (3a) in einem Austrittsbereich (A) die Förderstrecke verlässt und in einem Eintrittsbereich (E) wieder der Förderstrecke zugeführt ist, wobei der Eintrittsbereich (E) und der Austrittsbereich (A) in Förderrichtung (F) voneinander beabstandet sind, so dass der Unterbrechungsbereich gebildet (U) ist, und wobei mindestens eine der Mitnahmeeinrichtungen (2) in dem Unterbrechungsbereich (U) von dem ersten Förderriemen (3a) entkoppelt ist und wobei die Mitnahmeeinrichtung (2) vor und/oder nach dem Unterbrechungsbereich (U) mit dem ersten Förderriemen (3a) magnetisch koppelbar und/oder gekoppelt ist.

2. Fördervorrichtung (1) nach Anspruch 1, **dadurch gekennzeichnet, dass** die Fördervorrichtung (1) mindestens ein Trägermodul (22a, b) zur Aufnahme des Förderguts (34a, b) aufweist, wobei das Trägermodul (22a, b) lösbar mit mindestens einer der Mitnahmeeinrichtungen (2) verbunden ist.

3. Fördervorrichtung (1) nach Anspruch 1 oder 2, **dadurch gekennzeichnet, dass** die Mitnahmeeinrichtungen (2) an einer Oberseite eine Beschichtung (24) aufweisen, wobei die Beschichtung (24) lösbar mit mindestens einer der Mitnahmeeinrichtungen (2) verbunden ist.

4. Fördervorrichtung (1) nach Anspruch 1 oder 2, **dadurch gekennzeichnet, dass** die Mitnahmeeinrichtungen (2) als einzelne, voneinander getrennte Kettensegmente ausgebildet sind, wobei jedes Kettensegment aus mindestens zwei Kettengliedern (8) gebildet ist.

5. Fördervorrichtung nach einem der vorhergehenden Ansprüche, **dadurch gekennzeichnet, dass** die Fördervorrichtung (1) mindestens eine Profilschiene (5a, b) und einen zweiten Förderriemen (3b) aufweist, wobei die beiden Förderriemen (3a, b) parallel zueinander in der Profilschiene (5a, b) geführt sind, wobei die beiden Förderriemen (3a, b) in dem Unterbrechungsbereich (U) die Profilschiene (5a, b) verlassen und nach dem Unterbrechungsbereich (U) wieder in die Profilschiene (5a, b) zurückgeführt werden, wobei die Mitnahmeeinrichtungen (2) in dem Unterbrechungsbereich (U) weiter durch die Profilschiene (5a, b) geführt sind.

6. Fördervorrichtung (1) nach Anspruch 5, **dadurch gekennzeichnet, dass** die Fördervorrichtung (1) mindestens eine Stoppeinrichtung (7a, b) aufweist, wobei die Stoppeinrichtung (7a, b) ein Stoppelement zur Bildung eines Anschlags für mindestens eine der Mitnahmeeinrichtungen (2) aufweist, so dass die Mitnahmeeinrichtungen (2) einzeln in Förderrichtung (F) gestoppt oder freigegeben werden, wobei die Stoppeinrichtung (7a, b) zwischen den beiden Förderriemen (3a, b) angeordnet ist.

7. Fördervorrichtung (1) nach Anspruch 5 oder 6, **dadurch gekennzeichnet, dass** das Kettensegment ein Stopperglied (8b) sowie mindestens ein Einlaufglied (8a) und/oder mindestens ein Förderglied (8c) aufweist, wobei die Kettenglieder (8a, b, c) einen ersten und einen zweiten Auflageabschnitt (11a, b) aufweisen, wobei jedes der Kettenglieder (8a, b, c) mit dem ersten Auflageabschnitt (11a) auf dem ersten Förderriemen (3a) und mit dem zweiten Auflageabschnitt (11b) auf dem zweiten Förderriemen (3b) aufliegt.

8. Fördervorrichtung (1) nach Anspruch 7, **dadurch gekennzeichnet, dass** das Einlaufglied (8a) an seiner Unterseite eine Einlaufnut (14) aufweist, wobei die Einlaufnut (14) zwischen dem ersten und dem zweiten Auflageabschnitt (11a, b) in Förderrichtung (F) verläuft, so dass das Einlaufglied (8a) in Förderrichtung (F) ungehindert über das Stoppelement der aktivierten Stoppeinrichtung (7a, b) förderbar ist.

9. Fördervorrichtung (1) nach Anspruch 7 oder 8, **dadurch gekennzeichnet, dass** das Stopperglied (8b) an seiner Unterseite eine Anschlagnut (15) zur Bildung des Anschlags aufweist, wobei die Anschlagnut (15) zwischen dem ersten und dem zweiten Auflageabschnitt (11a, b) teilweise in Förderrichtung (F) verläuft, so dass das Stopperglied (8b) in Förderrichtung (F) durch das Stoppelement der aktivierten Stoppeinrichtung (7a, b) blockiert ist.

10. Fördervorrichtung (1) nach einem oder mehreren der Ansprüche 4 bis 9, **dadurch gekennzeichnet, dass** jedes Kettenglied (8) einen konkaven und einen konvexen Gelenkabschnitt (17, 18) zur Bildung eines Drehgelenks (19) aufweist, wobei der konvexe Gelenkabschnitt (18) in dem konkaven Gelenkabschnitt (17) aufgenommen ist, so dass die Kettenglieder (8) gegeneinander bewegbar sind und zugleich ein Anschlag der Kettenglieder (8) in Förderrichtung (F) gebildet ist.

11. Fördervorrichtung (1) nach einem oder mehreren der Ansprüche 4 bis 10, **dadurch gekennzeichnet, dass** die Kettenglieder (8) über eine Schnappverbindung miteinander verbunden sind.

12. Förderanlage (28) mit der Fördervorrichtung (1) nach einem der vorhergehenden Ansprüchen, wobei die Förderanlage (28) mindestens eine weitere Fördervorrichtungen (29) aufweist, wobei die Fördervorrichtungen (29) in Förderrichtung (F) miteinander verbunden sind und/oder parallel zueinander angeordnet sind.

13. Förderanlage (28) nach Anspruch 12, **dadurch gekennzeichnet, dass** die weitere Fördervorrichtung (29) mindestens einen weiteren Förderriemen (32a, b) aufweist, wobei der Förderriemen (3a, b) und der weitere Förderriemen (32a, b) in einem weiteren Unterbrechungsbereich (U1, U2) umgelenkt sind, wobei mindestens eine der Mitnahmeeinrichtungen (2) in dem weiteren Unterbrechungsbereich (U1, U2) von dem Förderriemen (3a, b) und dem weiteren Förderriemen (32a, b) entkoppelt ist, und wobei die Mitnahmeeinrichtung (2) außerhalb des weiteren Unterbrechungsbereichs (U1, U2) mit dem Förderriemen (3a, b) und/oder dem weiteren Förderriemen (32a, b) magnetisch koppelbar und/oder gekoppelt ist.

14. Förderanlage (28) nach Anspruch 13, **dadurch gekennzeichnet, dass** die Förderanlage (28) mindestens eine Verbindungsschiene (30a, b) aufweist, wobei die Verbindungsschiene (30a, b) die Fördervorrichtung (1) mit mindestens einer der weiteren Fördervorrichtungen (29) verbindet, so dass die Mitnahmeeinrichtungen (2) über die Verbindungsschiene (30a, b) in Förderrichtung (F) geführt sind, wobei der Förderriemen (3a, b) und der weitere Förderriemen (32a, b) in dem weiteren Unterbrechungsbereich (U1, U2) die Verbindungsschiene (30a, b) verlassen und nach dem weiteren Unterbrechungsbereich (U1, U2) wieder in die Verbindungsschiene (30a, b) zurückgeführt werden, wobei die Mitnahmeeinrichtungen (2) in dem weiteren Unterbrechungsbereich (U1, U2) weiter durch die Verbindungsschiene (30a, b) geführt sind.

## Claims

1. A conveyor device (1),
with multiple carrying facilities (2) that are separated from each other for transporting at least one item of goods to be conveyed (34a, b), wherein the carrying facilities (2) are flexibly designed, so that the carrying facilities (2) adjust themselves along a curve to a curve bend in the curve,
with at least one continuously revolving first conveyor belt (3a), wherein the first conveyor belt (3a) is deflected in an interruption area (U) in a conveyance direction (F),
with at least one drive facility (4), wherein the drive facility (4) drives the first conveyor belt (3a) in the conveyance direction (F), wherein each of the carrying facilities (2) has at least one magnet (12), wherein the first conveyor belt (3a) is ferro-magnetic or has a ferro-magnetic material, so that the carrying facilities (2) can be magnetically coupled with the first conveyor belt (3a), and wherein the carrying facilities (2) are carried in a coupled state by the first conveyor belt (3a) in the conveyance direction (F),
**characterized in that**
the first conveyor belt (3a) leaves the conveyance route in an exit area (A) and is guided back to the conveyance route in an entry area (E), wherein the entry area (E) and the exit area (A) are at a distance from each other in the conveyance direction (F), so that the interruption area (U) is formed, and wherein at least one of the carrying facilities (2) in the interruption area (U) is decoupled from the first conveyor belt (3a) and wherein the carrying facility (2) before and/or after the interruption area (U) can be and/or is magnetically coupled with the first conveyor belt (3a).

2. The conveyor device (1) according to Claim 1, **characterized in that** the conveyor device (1) has at least one support module (22a, b) for holding the goods to be conveyed (34a, b), wherein the support module (22a, b) is detachably connected to at least one of the carrying facilities (2).

3. The conveyor device (1) according to claim 1 or 2, **characterized in that** the carrying facilities (2) have a coating (24) on an upper side, wherein the coating (24) is detachably connected to at least one of the carrying facilities (2).

4. The conveyor device (1) according to claim 1 or 2, **characterized in that** the carrying facilities (2) are formed as individual chain segments that are separated from each other, wherein each chain segment is formed from at least two chain members (8).

5. The conveyor device according to any one of the preceding claims, **characterized in that** the conveyor device (1) has at least one profile rail (5a, b) and a second conveyor belt (3b), wherein the two conveyor belts (3a, b) are guided parallel to each other in the profile rail (5a, b), wherein the two conveyor belts (3a, b) leave the profile rail (5a, b) in the interruption area (U) and are guided back into the profile rail (5a, b) after the interruption area (U), wherein the carrying facilities (2) in the interruption area (U) are guided further through the profile rail (5a, b).

6. The conveyor device (1) according to Claim 5, **characterized in that** the conveyor device (1) has at least one stop facility (7a, b), wherein the stop facility (7a, b) has a stop element to form a stop for at least one of the carrying facilities (2), so that the carrying facilities (2) are individually stopped or released in the conveyance direction (F), wherein the stop facility (7a, b) is disposed between the two conveyor belts (3a, b).

7. The conveyor device (1) according to claim 5 or 6, **characterized in that** the chain segment has a stopper member (8b) and at least one inlet member (8a) and/or at least one conveyor member (8c), wherein the chain members (8a, b, c) have a first and a second support section (11a, b), wherein each of the chain members (8a, b, c) lies with the first support section (11a) on the first conveyor belt (3a) and with the second support section (11b) on the second conveyor belt (3b).

8. The conveyor device (1) according to Claim 7, **characterized in that** the inlet member (8a) has an inlet groove (14) on its lower side, wherein the inlet groove (14) runs between the first and the second support section (11a, b) in the conveyance direction (F), so that the inlet member (8a) is conveyable without interruption in the conveyance direction (F) via the stop element of the activated stop facility (7a, b).

9. The conveyor device (1) according to claim 7 or 8,**characterized in that** the stopper member (8b) has a stop groove (15) on its lower side to form the stop, wherein the stop groove (15) runs between the first and the second support section (11a, b), partially in the conveyance direction (F), so that the stopper member (8b) is blocked in the conveyance direction (F) by the stop element of the activated stop facility (7a, b).

10. The conveyor device (1) according to one or more of claims 4 to 9, **characterized in that** each chain member (8) has a concave and a convex joint section (17, 18) to form a pivot joint (19), wherein the convex joint section (18) is held in the concave joint section (17), so that the chain members (8) are movable in relation to each other and at the same time, a stop of the chain members (8) in the conveyance direction (F) is formed.

11. The conveyor device (1) according to one or more of claims 4 to 10, **characterized in that** the chain members (8) are connected to each other via a snap connection.

12. A conveyor system (28) with the conveyor device (1) according to any one of the preceding claims, wherein the conveyor system (28) has at least one further conveyor device (29), wherein the conveyor devices (29) are connected to each other and/or are disposed parallel to each other in the conveyance direction (F).

13. The conveyor system (28) according to Claim 12, **characterized in that** the further conveyor device (29) has at least one further conveyor belt (32a, b), wherein the conveyor belt (3a, b) and the further conveyor belt (32,a, b) are deflected in a further interruption area (U1, U2), wherein at least one of the carrying facilities (2) is decoupled in the further interruption area (U1, U2) from the conveyor belt (3a, b) and the further conveyor belt (32a, b), and wherein the carrying facility (2) outside the interruption area (U1, U2) can be and/or is magnetically coupled with the conveyor belt (3a, b) and/or the further conveyor belt (32a, b).

14. The conveyor system (28) according to Claim 13, **characterized in that** the conveyor system (28) has at least one connecting rail (30a, b), wherein the connecting rail (30a, b) connects the conveyor device (1) with at least one of the further conveyor devices (29), so that the carrying facilities (2) are guided over the connecting rail (30a, b) in the conveyance direction (F), wherein the conveyor belt (3a, b) and the further conveyor belt (32a, b) leave the connecting rail (30a, b) in the interruption area (U1, U2) and after the further interruption area (U1, U2) are guided back into the connecting rail (30a, b), wherein the carrying facilities (2) in the further interruption area (U1, U2) are guided further through the connecting rail (30a, b).

## Revendications

1. Dispositif de transport (1), comportant
plusieurs moyens de synchronisation (2), séparés les uns des autres, pour le transport d'au moins un produit à transporter (34a, b), dans lequel les moyens de synchronisation (2) sont conçus de manière flexible de telle sorte que les moyens de synchronisation (2) s'adaptent à une courbure de courbe le long de cette courbe,
au moins une première courroie de transport périphérique sans fin (3a), dans lequel la première courroie de transport (3a) est déviée dans une direction de transport (F) dans une zone d'interruption (U),
au moins un moyen d'entraînement (4), dans lequel le moyen d'entraînement (4) entraîne la première courroie de transport (3a) dans la direction de transport (F), dans lequel chacun des moyens de synchronisation (2) présente au moins un aimant (12), dans lequel la première courroie de transport (3a) est conçue de manière ferromagnétique ou présente un aimant ferromagnétique de telle sorte que les moyens de synchronisation (2) peuvent être couplés de manière magnétique avec la première courroie de transport (3a), et dans lequel les moyens de synchronisation (2) sont synchronisés par la première courroie de transport (3a) dans un état couplé dans la direction de transport (F),
**caractérisé en ce que**
la première courroie de transport (3a) quitte la trajectoire de déplacement dans une zone de sortie (A) et retourne dans la trajectoire de déplacement dans une zone d'entrée (E), dans lequel la zone d'entrée (E) et la zone de sortie (A) sont distantes l'une de l'autre dans la direction de transport (F) de manière à former la zone d'interruption (U), et dans lequel au moins l'un des moyens de synchronisation (2) est découplé de la première courroie de transport (3a) dans la zone d'interruption (U) et dans lequel le moyen de synchronisation (2) peut être couplé et/ou est couplé de manière magnétique à la première courroie de transport (3a) en amont et/ou en aval de la zone d'interruption (U).

2. Dispositif de transport (1) selon la revendication 1, **caractérisé en ce que** le dispositif de transport (1) présente au moins un module porteur (22a, b) pour recevoir le produit à transporter (34a, b), dans lequel le module porteur (22a, b) est relié de manière démontable à au moins l'un des moyens de synchronisation (2).

3. Dispositif de transport (1) selon la revendication 1 ou 2, **caractérisé en ce que** les moyens de synchronisation (2) présentent un revêtement (24) sur une face supérieure, dans lequel le revêtement (24) est relié de manière démontable à au moins l'un des moyens de synchronisation (2).

4. Dispositif de transport (1) selon la revendication 1 ou 2, **caractérisé en ce que** les moyens de synchronisation (2) sont conçus sous la forme de segments de chaîne individuels séparés les uns des autres, dans lequel chaque segment de chaîne est formé d'au moins deux maillons (8).

5. Dispositif de transport selon l'une quelconque des revendications précédentes, **caractérisé en ce que** le dispositif de transport (1) présente au moins un rail profilé (5a, b) et une seconde courroie de transport (3b), dans lequel les deux courroies de transport (3a, b) sont guidées parallèlement l'une par rapport à l'autre dans le rail profilé (5a, b), dans lequel les deux courroies de transport (3a, b) quittent le rail profilé (5a, b) dans la zone d'interruption (U) et, en aval de la zone d'interruption (U), retournent dans le rail profilé (5a, b), les moyens de synchronisation (2) étant guidés à nouveau par le rail profilé (5a, b) dans la zone d'interruption (U).

6. Dispositif de transport (1) selon la revendication 5, **caractérisé en ce que** le dispositif de transport (1) présente au moins un moyen d'arrêt (7a, b), dans lequel le moyen d'arrêt (7a, b) présente un élément d'arrêt pour former une butée pour au moins l'un des moyens de synchronisation (2), de telle sorte que les moyens de synchronisation (2) sont, arrêtés ou libérés de manière individuelle dans la direction de transport (F), le moyen d'arrêt (7a, b) étant disposé entre les deux courroies de transport (3a, b).

7. Dispositif de transport (1) selon la revendication 5 ou 6, **caractérisé en ce que** le segment de chaîne présente un organe d'arrêt (8b) ainsi qu'au moins un organe d'arrivée (8a) et/ou au moins un organe de transport (8c), dans lequel les maillons (8a, b, c) présentent une première et une seconde section de support (11a, b), chacun des maillons (8a, b, c) reposant sur la première courroie de transport (3a) avec la première section de support (11a) et sur la seconde courroie de transport (3b) avec la seconde section de support (11b).

8. Dispositif de transport (1) selon la revendication 7, **caractérisé en ce que** l'organe d'arrivée (8a) présente sur sa face inférieure une rainure d'arrivée (14), dans lequel la rainure d'arrivée (14) s'étend dans la direction de transport (F) entre la première et la seconde section de support (11a, b) de telle sorte que l'organe d'arrivée (8a) peut être transporté librement sur l'élément d'arrêt du moyen d'arrêt (7a, b) activé dans la direction de transport (F).

9. Dispositif de transport (1) selon la revendication 7 ou 8, **caractérisé en ce que** l'organe d'arrêt (8b) présente sur sa face inférieure une rainure de butée (15) pour former la butée, dans lequel la rainure de butée (15) s'étend en partie dans la direction de transport (F) entre la première et la seconde section de support (11a, b) de telle sorte que l'organe d'arrêt (8b) est bloqué (F) par l'élément d'arrêt du moyen d'arrêt (7a, b) activé dans la direction de transport.

10. Dispositif de transport (1) selon l'une ou plusieurs des revendications 4 à 9, **caractérisé en ce que** chaque maillon (8) présente une section d'articulation concave et une convexe (17, 18) pour former une articulation à charnière (19), dans lequel la section d'articulation convexe (18) est reçue dans la section d'articulation concave (17) de telle sorte que les maillons (8) peuvent se déplacer les uns contre les autres et en même temps une butée des maillons (8) est formée dans la direction de transport (F).

11. Dispositif de transport (1) selon l'une ou plusieurs des revendications 4 à 10, **caractérisé en ce que** les maillons (8) sont reliés les uns aux autres par une liaison par encliquetage.

12. Installation de transport (28) comprenant le dispositif de transport (1) selon l'une quelconque des revendications précédentes, dans lequel l'installation de transport (28) présente au moins un dispositif de transport supplémentaire (29), dans lequel les dispositifs de transport (29) sont reliés les uns aux autres dans la direction de transport (F) et/ou sont disposés parallèlement les uns par rapport aux autres.

13. Installation de transport (28) selon la revendication 12, **caractérisé en ce que** le dispositif de transport supplémentaire (29) présente au moins une courroie de transport supplémentaire (32a, b), dans lequel la courroie de transport (3a, b) et la courroie de transport supplémentaire (32a, b) sont déviées dans une zone d'interruption supplémentaire (U1, U2), dans lequel au moins l'un des moyens de synchronisation (2) est découplé de la courroie de transport (3a, b) et de la courroie de transport supplémentaire (32a, b) dans la zone d'interruption supplémentaire (U1, U2), et dans lequel le moyen de synchronisation (2) est couplé et/ou peut être couplé de manière magnétique à la courroie de transport (3a, b) et/ou la courroie de transport supplémentaire (32a, b) à l'extérieur de la zone d'interruption supplémentaire (U1, U2).

14. Installation de transport (28) selon la revendication 13, **caractérisé en ce que** l'installation de transport (28) présente au moins un rail de liaison (30a, b), dans lequel le rail de liaison (30a, b) relie le dispositif de transport (1) à au moins l'un des dispositifs de transport supplémentaires (29) de telle sorte que les moyens de synchronisation (2) sont guidés sur le rail de liaison (30a, b) dans la direction de transport (F), dans lequel la courroie de transport (3a, b) et la courroie de transport supplémentaire (32a, b) quittent le rail de liaison (30a, b) dans la zone d'interruption supplémentaire (U1, U2) et, en aval de la zone d'interruption supplémentaire (U1, U2), retournent dans le rail de liaison (30a, b), les moyens de synchronisation (2) étant guidés à nouveau par le rail de liaison (30a, b) dans la zone d'interruption (U1, U2) supplémentaire.
